# EUROPEAN PATENT APPLICATION

(11) **EP 4 708 005 A1**
(43) Date of publication of application: **11.03.2026**
(21) Application number: 24815781.0
(22) Date of filing: 23.05.2024
(51) Int. Cl.: G06F 3/041, G06F 3/0488, G06F 1/16, H04M 1/72454

(54) **METHOD FOR CORRECTING USER INPUT ACCORDING TO SLIDING OPERATION OF DISPLAY AND ELECTRONIC DEVICE SUPPORTING SAME**

(30) Priority: 26.05.2023 KR 20230068333; 16.06.2023 KR 20230077610
(71) Applicant: Samsung Electronics Co., Ltd., Suwon-si, Gyeonggi-do 16677 (KR)
(72) Inventor: WOO, Kwangtaek, Suwon-si, Gyeonggi-do 16677 (KR); KIM, Sangheon, Suwon-si, Gyeonggi-do 16677 (KR); KIM, Seonghun, Suwon-si, Gyeonggi-do 16677 (KR); KIM, Minsoo, Suwon-si, Gyeonggi-do 16677 (KR); LEE, Soogyu, Suwon-si, Gyeonggi-do 16677 (KR); LEE, Jiwoo, Suwon-si, Gyeonggi-do 16677 (KR); HAN, Yonggil, Suwon-si, Gyeonggi-do 16677 (KR)
(74) Representative: Nederlandsch Octrooibureau
(86) International application number: PCT/KR2024/006982
(87) International publication number: WO 2024/248404

(57) **Abstract**

An embodiment of the present disclosure provides an electronic device having a flexible display and an operating method thereof. The electronic device may comprise a display, a memory, and at least one processor. The processor may display an execution screen of an application in a designated state of the display. The processor may display an input area through the execution screen. The processor may detect a sliding event in which the size of the display area of the display is changed by a sliding operation of the display while a user input is received on the basis of the input area. The processor may correct input coordinates related to a user input of the input area on the basis of the size of the display area changed according to the slide state on the basis of the detection of the sliding event. The processor may process the user input on the basis of the corrected input coordinates.

## Description

### [Technical Field]

Embodiments of the disclosure provides an electronic device having a flexible display (e.g., rollable display or slidable display) and an operating method thereof.

### [Background Art]

With the development of digital technology, various types of electronic devices, such as a mobile communication terminal, a personal digital assistant (PDA), an electronic notebook, a smart phone, a tablet personal computer (PC), a wearable device, a laptop PC, and/or a display device (e.g., TV and/or monitor), are being widely used. The hardware part and/or software part of these electronic devices are continuously being developed to support and enhance their functions.

An electronic device may have a limited size for portability, and a size of a display is being limited accordingly. Therefore, in the recent times, various types of electronic devices are being developed to provide more extended screens on the electronic devices. For example, an electronic device is gradually increasing in a screen size on a display with limited size, and is being designed to provide a user with various services (or functions) through a large screen.

The recent electronic device may have a new form factor, such as a rollable device (or slidable device) and/or foldable & slidable hybrid device. For example, the electronic device is equipped with a flexible display (e.g., rollable display or slidable display), and at least a portion of the display may be rolled up or unfolded for use. For example, the electronic device may be implemented to extend or reduce the screen using a sliding method. For example, a portion of the flexible display may slide out from the internal space of the electronic device or may slide in into the internal space of the electronic device and accordingly, the screen may be extended or reduced.

The need for development of a corresponding user interface and an operation thereof is increasing according to a new form factor of an electronic device.

The above-described information may be provided as the related art to help understanding of the disclosure. No claim or determination is made as to whether any of the above-described contents is applicable as the prior art related to the disclosure.

### [Disclosure of Invention]

### [Technical Problem]

An embodiment of the disclosure provides a method of correcting a user input (e.g., touch) in an electronic device (e.g., rollable device or slidable device) including a flexible display (e.g., rollable display or slidable display), and an electronic device for supporting the same.

An embodiment of the disclosure provides a method of correcting a user input (e.g., touch) according to a state change (e.g., sliding motion), such as an increase (or extension) (e.g., slide out or roll out) in a size of a display area of a display or a decrease (reduction) (e.g., slide in or roll in) in the size of the display area of the display in an electronic device including a flexible display, and an electronic device for supporting the same.

An embodiment of the disclosure provides a method of correcting a user input according to a sliding motion in a situation in which the user input and the sliding motion (e.g., slide-in/slide-out motion of display) occur together in an electronic device (e.g., case in which touch occurs during slide-in/slide-out motion or case in which slide-in/slide-out occurs during touch motion), and an electronic device for supporting the same.

An embodiment of the disclosure provides a method that may solve consistency issues, which may occur when an input area changes due to a sliding event, by correcting a location of a user input and a location of a screen in real time in an electronic device in which an input area of a user may change according to a sliding motion of a display, and an electronic device for supporting the same.

Technical subjects to be accomplished herein are not limited to the above-described technical subjects, and still other technical subjects not described may be clearly understood by one of ordinary skill in the art to which the present invention pertains from the following description.

### [Solution to Problem]

An electronic device according to an embodiment of the disclosure may include a first housing, a second housing provided to slidably move in a specified direction from the first housing, a display having a first display area and second display area that extends from the first display area and according to a state change according to a slide movement of the second housing, at least one processor including a processing circuitry, and operatively connected to the display, and a memory operatively connected to the at least one processor.

According to an embodiment, the memory may include an instruction that when executed by the at least one processor, causes the electronic device to display an execution screen of an application in a specified state of the display. According to an embodiment, the memory may include an instruction that when executed by the at least one processor, causes the electronic device to display an input area through the execution screen. According to an embodiment, the memory may include an instruction that when executed by the at least one processor, causes the electronic device to detect a sliding event that a size of a display area of the display changes due to a sliding motion of the display while displaying the input area through the execution screen. According to an embodiment, the memory may include an instruction that when executed by the at least one processor, causes the electronic device to correct input coordinates related to a user input of the input area based on the size of the display area that changes according to a slide state based on detection of the sliding event. According to an embodiment, the memory may include an instruction that when executed by the at least one processor, causes the electronic device to process the user input based on the corrected input coordinates.

An electronic device according to an embodiment of the disclosure may include a display having a first display area and a second display area that extends from the first display area. An operating method of the electronic device according to an embodiment of the disclosure may include displaying an execution screen of an application in a specified state of the display. According to an embodiment, the operating method may include displaying an input area through the execution screen. According to an embodiment, the operating method may include detecting a sliding event that a size of a display area of the display changes according to a sliding motion of the display while displaying the input area through the execution screen. According to an embodiment, the operating method may include correcting input coordinates related to a user input of the input area based on the size of the display area that changes according to a slide state, based on detection of the sliding event. According to an embodiment, the operating method may include processing the user input based on the corrected input coordinates.

Various embodiments of the disclosure to solve the above-described problems may include a computer-readable medium recording a program to execute the method on a processor.

According to an embodiment, a non-transitory computer-readable medium (or storage medium or computer program product) storing one or more programs are described. According to an embodiment, the one or more programs may include instructions that, when executed by a processor of an electronic device, cause the electronic device to perform an operation of displaying an execution screen of an application in a specified state of the display, an operation of displaying an input area through the execution screen, an operation of detecting a sliding event that a size of display area of the display changes according to a sliding motion of the display while displaying the input area through the execution screen, an operation of correcting input coordinates related to a user input of the input area based on the size of the display area that changes according to the slide state based on detection of the sliding event, and an operation of processing the user input based on the corrected input coordinates.

The additional scope of applicability of the disclosure will become apparent from the following detailed description. However, since various changes and modifications within the spirit and scope of the disclosure will be apparent to those skilled in the art, the detailed description and a specific embodiment such as a desirable embodiment of the disclosure should be understood to be given as example only.

### [Advantageous Effects of Invention]

According to an electronic device according to an embodiment of the disclosure, an operating method thereof, and a recording medium, in the electronic device (e.g., rollable device or slidable device) including a flexible display (e.g., rollable display or slidable display), a user input (e.g., touch) may be adaptively corrected according to a change in a state of the electronic device (e.g., change in size of display area according to sliding motion). According to an embodiment of the disclosure, in a situation in which a user input (e.g., touch input) by a user and a sliding motion (e.g., slide-in/slide-out motion of display) occur together in an electronic device (e.g., case in which touch occurs during slide-in/slide-out motion or case in which slide-in/out occurs during touch motion), input coordinates (e.g., touch coordinates) may be corrected such that the user input (e.g., touch) is recognized and related information is displayed according to the user intent.

According to an embodiment of the disclosure, in an electronic device in which an input area of a user may change according to a sliding motion of a display, user usability may be improved by solving consistency issues that may occur when the input area changes due to a sliding event through correction for a location of a user input and a location of a screen in real time. According to an embodiment of the disclosure, it is possible to improve usability and convenience of an electronic device by supporting adaptive correction for the user input to a change in a state of the electronic device.

In addition, various effects that may be directly or indirectly identified through this document may be provided. Effects to be accomplished herein are not limited to the above-described effects, and still other effects not described may be clearly understood by one of ordinary skill in the art to which the disclosure pertains from the following description.

### [Brief Description of Drawings]

In relation to description of drawings, the same or similar reference numerals may be used for the same or similar components.
FIG. 1 is a block diagram of an electronic device in a network environment according to various embodiments.
FIGS. 2a and 2b are views illustrating the front surface and the rear surface of an electronic device in a closed state of the electronic device having a form factor according to an embodiment.
FIGS. 2c and 2d are views illustrating the front surface and the rear surface of an electronic device in an open state of the electronic device having a form factor according to an embodiment.
FIGS. 3a and 3b are views illustrating the front surface and the rear surface of an electronic device in a closed state of the electronic device having a form factor according to an embodiment.
FIGS. 3c and 3d are views illustrating the front surface and the rear surface of an electronic device in an open state of the electronic device having a form factor according to an embodiment.
FIG. 4 is an exploded perspective view of an electronic device having a form factor according to an embodiment.
FIGS. 5a, 5b, 5c, 5d, 5e, 5f, and 5g are views illustrating various embodiments of a structure of an extendable display of an electronic device according to an embodiment.
FIG. 6 is a diagram schematically illustrating a constitution of an electronic device according to an embodiment of the disclosure.
FIG. 7 is a flowchart illustrating an operating method of an electronic device according to an embodiment of the disclosure.
FIG. 8 is a flowchart illustrating an operating method of an electronic device according to an embodiment of the disclosure.
FIG. 9 is a flowchart illustrating an operating method of an electronic device according to an embodiment of the disclosure.
FIGS. 10a and 10b illustrate examples of an operation for processing a user input in an electronic device according to an embodiment of the disclosure.
FIGS. 11a and 11b illustrate examples of an operation for processing a user input in an electronic device according to an embodiment of the disclosure.
FIGS. 12a, 12b, 12c, and 12d illustrate examples of an operation for processing a user input in an electronic device according to an embodiment of the disclosure.

### [Mode for the Invention]

Hereinafter, embodiments of the present disclosure will be described in detail with reference to the drawings so that those skilled in the art to which the present disclosure pertains can easily implement the disclosure. However, the present disclosure may be implemented in various different forms and is not limited to the embodiments described herein. In the description of the drawings, the same or similar reference numerals may be used for the same or similar components. In addition, in the drawings and the related description, descriptions of well-known functions and configurations may be omitted for clarity and conciseness.

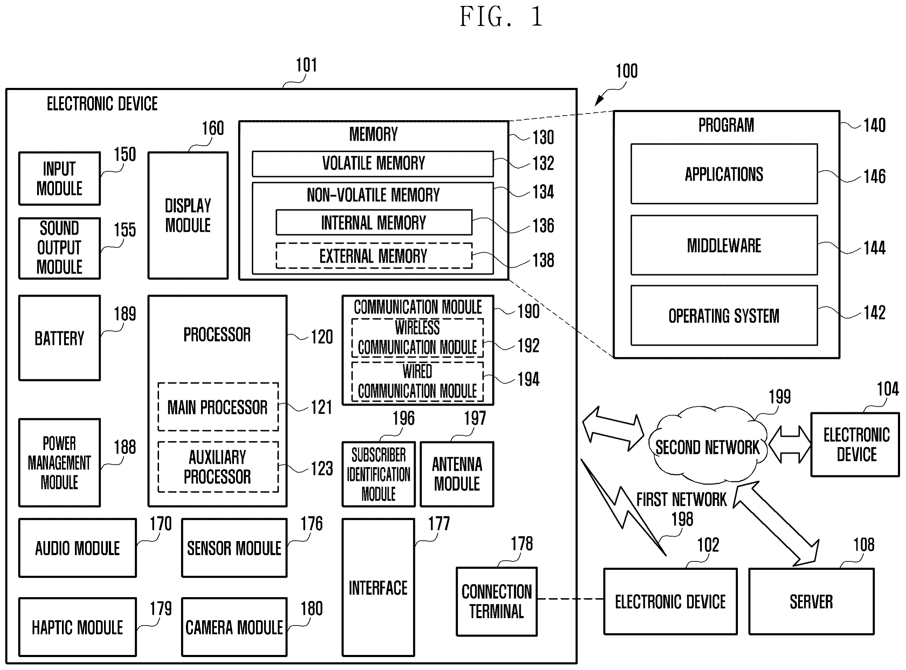

Fig. 1 is a block diagram illustrating an electronic device in a network environment according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

An electronic device according to various embodiments disclosed herein may be a device in various forms. The electronic device may include, for example, a portable communication device (e.g., smartphone), a computer device, a portable multimedia device, a portable medical device, a camera, a wearable device, or a home appliance device. The electronic device according to an embodiment herein is not limited to the above-described devices.

Various embodiments and terms used herein are not construed to limit technical features disclosed herein to specific embodiments, and should be understood to include various modifications, equivalents, or substitutions of a corresponding embodiment. In describing drawings, like reference numerals refer to like components. The singular forms "a," "an," and "the" of noun corresponding to an item are intended to include one item or a plurality of items, unless the context clearly indicates otherwise. Herein, each of the expressions, "A or B," "at least one of A and B," "at least one of A or B," "A, B, or C," "at least one of A, B, and C," "at least one of A, B, or C," and the like may include any possible combinations of items listed with a corresponding expression among the expressions. Terms "first," "second," etc., are simply used to distinguish one component from another component and do not limit the corresponding components in another aspect (e.g., importance or order). When a (e.g., first) component is described to be "coupled" or "connected to" another (e.g., second) component along with the term "functionally" or "communicatively," the component may be directly (e.g., wiredly) connected to the other component or may be connected through a third component.

The term "module" used in various embodiments herein may include a unit implemented as hardware, software, or firmware, and may be interchangeably used with the terms, for example, logic, logic block, part, and circuit. The module may be an integrally configured part or a minimal unit of the part that performs one or more functions or a portion thereof. For example, according to an embodiment, the module may be implemented in a form of an application-specific integrated circuit (ASIC).

Various embodiments disclosed herein may be implemented as software (e.g., program 140) that includes one or more commands stored in a storage medium (e.g., internal memory 136 or external memory 138) readable by a machine (e.g., electronic device 101). For example, a processor (e.g., processor 120) of the machine (e.g., electronic device 101) may call and execute at least one command among the one or more commands stored in the storage medium, which enables the device to operate to perform at least one function in response to the called at least one command. The one or more commands may include a code generated by a compiler or a code executable by an interpreter. The storage medium readable by the device may be provided in the form of a non-transitory storage medium. Here, "non-transitory" simply indicates that the storage medium is a tangible device and does not include a signal (e.g., electromagnetic wave). This term does not distinguish a case in which data is semi-permanently stored in the storage medium from a case in which the data is transitorily stored in the storage medium.

According to an embodiment, a method according to various embodiments disclosed herein may be included in a computer program product and thereby provided. The computer program product may be traded between a seller and a purchaser. The computer program product may be distributed in a form of a storage medium readable by a machine (e.g., compact disc read only memory (CD-ROM)) or may be distributed (e.g., downloaded or uploaded) directly or online through an application store (e.g., PlayStore^{™}) or between two user devices (e.g., smartphones). In the case of online distribution, at least a portion of the computer program product may be at least transitorily stored or temporarily generated in a server of a manufacturer, a server of application store, or a storage medium readable by machine such as a memory of a repeater server.

According to various embodiments, a component (e.g., module or program) of each of the above-described components may include a singular object or a plurality of objects, and a portion of the plurality of objects may be separately provided to another component. According to various embodiments, one or more components among the above-described components or operations may be omitted, or one or more other components or operations may be added. Alternatively or additionally, the plurality of components (e.g., modules or programs) may be integrated into one component. In this case, the integrated component may perform one or more functions of each of the plurality of components identically or similarly as being performed by a corresponding component among the plurality of components before the integration. According to various embodiments, operations performed by a module, a program, or another component may be executed sequentially, in parallel, repeatedly, or heuristically, or at least one of the operations may be executed in different order or omitted. Alternatively, one or other operations may be added.

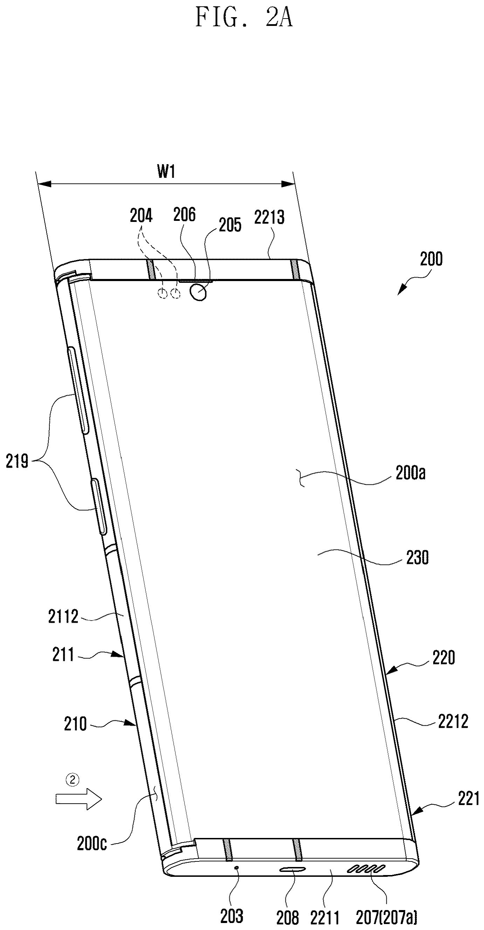

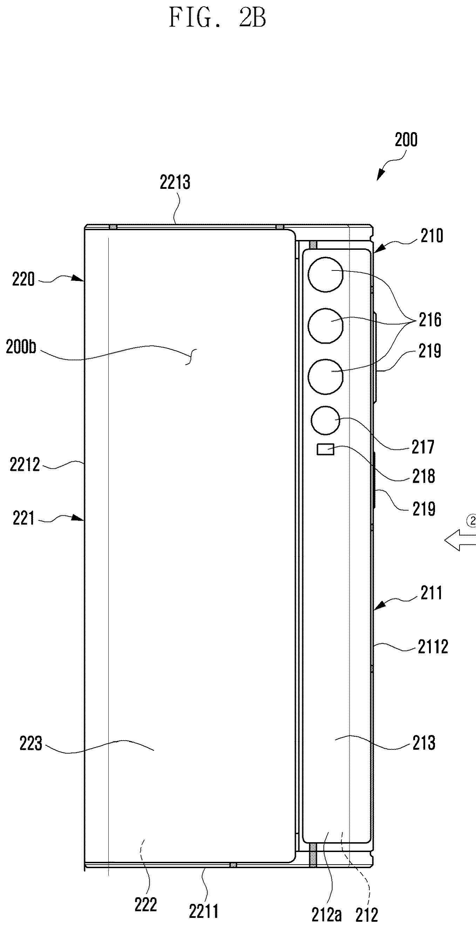

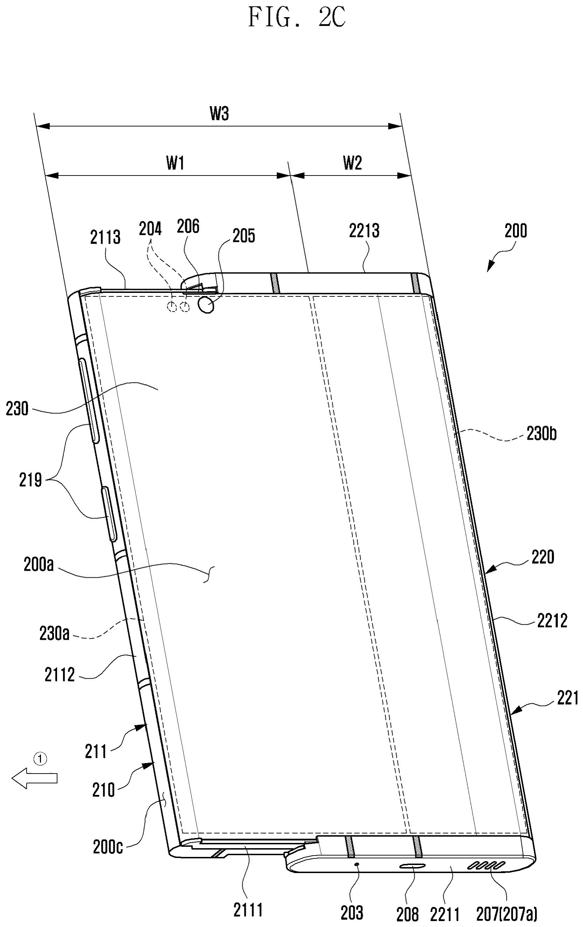

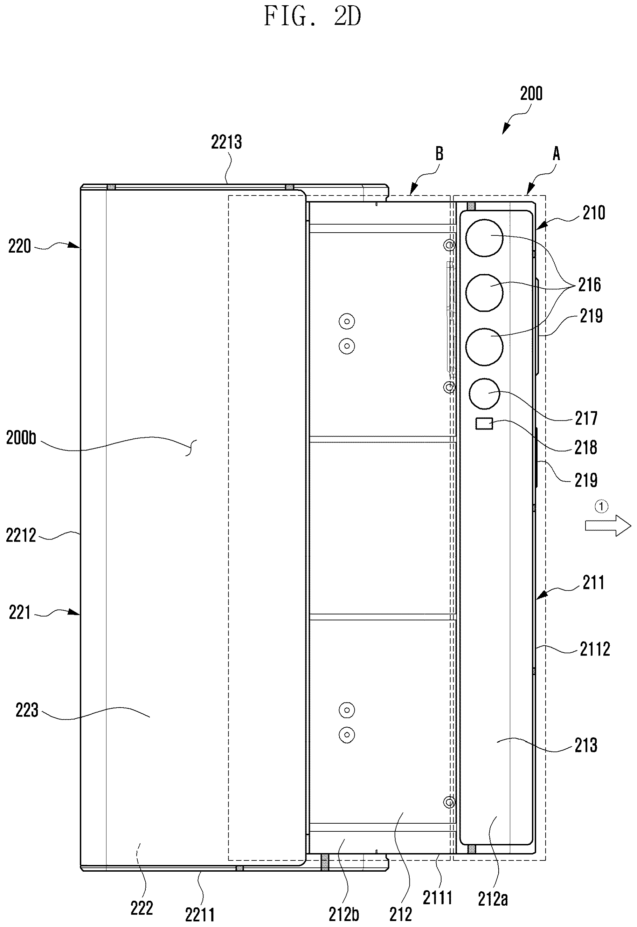

FIGS. 2a and 2b are views illustrating the front surface and the rear surface of an electronic device in a closed state of the electronic device having a form factor according to an embodiment. FIGS. 2c and 2d are views illustrating the front surface and the rear surface of an electronic device in an open state of the electronic device having a form factor according to an embodiment.

An electronic device 200 of FIG. 2a to FIG. 2d may be at least partially similar to the electronic device 101 of FIG. 1, may include the electronic device 101 of FIG. 1, or may further include other embodiments of the electronic device 101 of FIG. 1.

With reference to FIG. 2a to FIG. 2d, the electronic device 200 may include a first housing 210 (e.g., first housing structure or base housing), a second housing 220 (e.g., second housing structure or slide housing), and a flexible display 230 (e.g., extendable display) provided to be supported through at least a portion of the first housing 210 and the second housing 220. According to an embodiment, the first housing 210 may be coupled to the second housing 220 to be movable (e.g., slidable) in a specified direction (e.g., x-axis direction) and a specified reciprocating distance.

According to an embodiment, the electronic device 200 may include a bendable member (or bendable support member) (e.g., multi-joint hinge module or multi-bar assembly) that forms at least partially the same plane as at least a portion of the first housing 210 in an open state (or extended state or slide-out state) and is at least partially accommodated in the internal space of the second housing 220 in a closed state (or reduced state or slide-in state). According to an embodiment, at least a portion of the flexible display 230 may be provided to be invisible from the outside by being accommodated in the internal space of the second housing 220, while being supported by the bendable member. According to an embodiment, at least a portion of the flexible display 230 may be provided to be visible from the outside while being supported by the bendable member that forms at least partially the same plane as the first housing 210 in the open state.

According to various embodiments, the electronic device 200 may include a front surface 200a (e.g., first surface), a rear surface 200b (e.g., second surface) that faces opposite to the front surface 200a, and a side surface (not shown) that encloses the space between the front surface 200a and the rear surface 200b. According to an embodiment, the electronic device 200 may include the first housing 210 that includes a first lateral member 211 and the second housing 220 that includes a second lateral member 221. According to an embodiment, the first lateral member 211 may include a first side surface 2111 that has a first length along a first direction (direction ①), a second side surface 2112 that extends from the first side surface 2111 to have a second length longer than the first length along the substantially vertical direction, and a third side surface 2113 that extends from the second side surface 2112 to be substantially parallel to the first side surface 2111 and has the first length. According to an embodiment, the first lateral member 211 may be at least partially formed of a conductive material (e.g., metal). According to an embodiment, at least a portion of the first lateral member 211 may include a first support member 212 that extends to at least a portion of the internal space of the first housing 210.

According to various embodiments, the second lateral member 221 may include a fourth side surface 2211 that at least partially corresponds to the first side surface 2111 and has a third length, a fifth side surface 2212 that extends from the fourth side surface 2211 in a direction substantially parallel to the second side surface 2112 and has a fourth length longer than the third length, and a sixth side surface 2213 that extends from the fifth side surface 2212 to correspond to the third side surface 2113 and has the third length. According to an embodiment, the second lateral member 221 may be at least partially formed of a conductive material (e.g., metal). According to an embodiment, at least a portion of the second lateral member 221 may include a second support member 222 that extends to at least a portion of the internal space of the second housing 220. According to an embodiment, the first side surface 2111 and the fourth side surface 2211 and the third side surface 2113 and the sixth side surface 2213 may be slidably coupled to each other. According to an embodiment, in the closed state, the first side surface 2111 may be provided to be invisible from the outside by overlapping at least a portion of the fourth side surface 2211. According to an embodiment, in the closed state, the third side surface 2113 may be provided to be visible from the outside by overlapping at least a portion of the sixth side surface 2213. According to an embodiment, in the closed state, at least a portion of the first support member 212 may overlap the second support member 222, and a remaining portion of the first support member 212 may be provided to be visible from the outside. Therefore, in the closed state, the first support member 212 may include a non-overlapping portion 212a that does not overlap the second support member 222 and an overlapping portion 212b that overlaps the second support member 222. In some embodiments, the non-overlapping portion 212a and the overlapping portion 212b may be integrally formed. In some embodiments, the non-overlapping portion 212a and the overlapping portion 212b may be separately provided and structurally combined.

According to various embodiments, the first housing 210 may include a first subspace (A) corresponding to the non-overlapping portion 212a and a second subspace (B) corresponding to the overlapping portion 212b in the first space. According to an embodiment, the first subspace (A) and the second subspace (B) may be provided in such a manner that they are at least partially connected to each other or separated from each other. According to an embodiment, the first subspace (A) may be formed to have larger spatial volume than that of the second subspace (B). This may be due to the overlapping structure in which the second support member 222 and the first support member 212 overlap in an area corresponding to the second subspace (B). According to an embodiment, the electronic device 200 may include a plurality of electronic parts (e.g., camera module 216, sensor module 217, flash 218, main board (or PCB)) or battery provided in the first space of the first housing 210. According to an embodiment, the first subspace (A) may be utilized as an area in which, for example, electronic parts (e.g., camera module 216, sensor module 217, or flash 218) that require relatively large mounting space (relatively large mounting thickness) or needs to operate while avoiding the overlapping structure are provided. According to an embodiment, the second subspace (B) may be utilized as an area in which, for example, electronic parts (e.g., main board (or PCB)) that require relatively small mounting space (relatively small mounting thickness) or may operate regardless of the overlapping structure or battery is provided.

According to various embodiments, the front surface 200a and the rear surface 200b of the electronic device 200 may have variable areas depending on the closed state and the open state. In some embodiments, the electronic device 200 may include, on the rear surface 200b, a first rear cover 213 provided to at least a portion of the first housing 210 and a second rear cover 223 provided to at least a portion of the second housing 220. According to an embodiment, the first rear cover 213 and/or the second rear cover 223 may be provided in such a manner that they are coupled to at least a portion of the first support member 212 and the second support member 213. In some embodiments, the first rear cover 213 and/or the second rear cover 223 may be integrally formed with the respective lateral members 211 and 221. According to an embodiment, the first rear cover 213 and/or the second rear cover 223 may be formed of polymer, coated or colored glass, ceramic, a metal (e.g., aluminum (Al), stainless steel (STS), or magnesium), or combination of at least two of the materials. In some embodiments, the first rear cover 213 and/or the second rear cover 223 may extend to at least a portion of each of the lateral members 211 and 221. In some embodiments, at least an extended portion of each of the lateral members 211 and 221 of the first rear cover 213 and the second rear cover 223 may be formed as the curved surface. In some embodiments, at least a portion of the first support member 212 may be replaced with the first rear cover 213, and at least a portion of the second support member 222 may be replaced with the second rear cover 223.

According to various embodiments, the electronic device 200 may include the flexible display 230 provided to be supported by at least a portion of the first housing 210 and the second housing 220. According to an embodiment, the flexible display 230 may include a first portion 230a (e.g., flat portion) that is visible from the outside at all times and a second portion 230b (e.g., bendable portion) that extends from the first portion 230a and at least partially slides in into the internal space of the second housing 220 to be invisible from the outside in the closed state. According to an embodiment, the first portion 230a may be provided to be supported by the first housing 210, and the second portion 230b may be provided to be at least partially supported by the bendable member. According to an embodiment, the flexible display 230 may extend from the first portion 230a while being supported by the bendable member in a state in which the first housing 210 is slid out in a specified first direction (direction ①), and may be provided to form substantially the same plane as the first portion 230a and to be visible from the outside. According to an embodiment, the second portion 230b of the flexible display 230 may be provided to slide in into the internal space of the second housing 220 in a state in which the first housing 210 is slid in along a specified second direction (direction ②) and to be invisible from the outside. Therefore, the electronic device 200 may induce a display area of the flexible display 230 to be variable as the first housing 210 slidably moves along a specified direction from the second housing 220.

According to various embodiments, the first housing 210 and the second housing 220 may operate in a sliding manner such that the entire width may vary relative to each other. According to an embodiment, the electronic device 200 may be configured to have a first width (W1) from the second side surface 2112 to the fourth side surface 2212 in the closed state. According to an embodiment, the electronic device 200 may be configured to have a third width (W3) greater than the first width (W1) in such a manner that a portion of the bendable member slid in the internal space of the second housing 220 moves to have an additional second width (W2) in the open state. For example, the flexible display 230 may have a display area substantially corresponding to the first width (W1) in the closed state, and may have an extended display area substantially corresponding to the third width (W3) in the open state.

According to various embodiments, a slide-out motion of the electronic device 200 may be performed through a manipulation of the user. For example, the electronic device 200 may transition from the closed state to the open state through an operation of the flexible display 230 that is pushed in the specified first direction (direction ①) through the manipulation of the user. According to an embodiment, the electronic device 200 may transition from the open state to the closed state through an operation of the flexible display 230 that is pushed in the specified second direction (direction ②) through the manipulation of the user. According to an embodiment, the electronic device 200 may maintain the open state and/or the closed state by being pressed in a direction in which the first housing 210 is to slide in into or slide out from the second housing 220 based on a specified inflection point through a slide hinge module (not shown) provided between the first housing 210 and the second housing 220. In some embodiments, the electronic device 200 may be configured such that the first housing 210 slides out in the specified first direction (e.g., direction ①) through a manipulation of a locker exposed through the rear surface 200b of the electronic device 200. In some embodiments, the electronic device 200 may automatically operate through driving mechanism (e.g., driving motor, reduction module, and/or gear assembly) provided in the internal space of the first housing 210 and/or internal space of the second housing 220. According to an embodiment, if an event for transition to the closed/open state of the electronic device 200 is detected through the processor (e.g., processor 120 of FIG. 1), the electronic device 200 may be configured to control an operation of the second housing 220 through the driving mechanism. In some embodiments, the processor (e.g., processor 120 of FIG. 1) of the electronic device 200 may control the flexible display 230 to display visual information (e.g., object and/or application execution screen) using various methods in response to the changed display area of the flexible display 230 according to a closed state, an open state, or an intermediate state) (e.g., including free stop state).

According to various embodiments, the electronic device 200 may include at least one of an input module 203 (e.g., input module 150 of FIG. 1), a sound output module 206, 207 (e.g., sound output module 155 of FIG. 1), a sensor module 204, 217, a camera module 205, 216, a connector port 208, a key input device 219, and an indicator (not shown). In another embodiment, the electronic device 200 may be configured such that at least one of the above-described components may be omitted, or other components may be additionally included.

According to various embodiments, the input module 203 may include a microphone. In some embodiments, the input module 203 may include a plurality of microphones provided to detect the direction of sound. The sound output module 206, 207 may include a speaker. The sound output module 206, 207 may include a call receiver 206 and an external speaker 207. According to an embodiment, the external speaker 207 may be provided to the second housing 220, and may be configured to transmit sound to the outside through a first speaker hole 207a. According to an embodiment, the external speaker 207 may be provided in the internal space of the second housing 220 and may provide excellent quality sound to the user regardless of a sliding motion of the first housing 210. According to an embodiment, the connector port 208 may be provided in the internal space of the second housing 220, together with the external speaker 207. In some embodiments, the connector port 208 may be provided in the internal space of the first housing 210 and, in the closed state, may be exposed to the outside through a connector port hole (not shown) formed in the second housing 220. In this case, the connector port 208 may be configured to be covered to be invisible from the outside through the second housing 220 in the closed state. According to an embodiment, the receiver 206 may be configured to correspond to an external environment within the internal space of the first housing 210. In some embodiments, the sound output module 206, 207 may also include a speaker (e.g., piezo speaker) that operates without a separate speaker hole.

According to various embodiments, the sensor module 204, 217 may generate an electrical signal or a data value corresponding to an internal operating state of the electronic device 200 or an external environmental state. The sensor module 204, 217 may include, for example, a first sensor module 204 (e.g., proximity sensor or ambient sensor) provided on the front surface 200a of the electronic device 200 and/or a second sensor module 217 provided on the rear surface 200b. According to an embodiment, the first sensor module 204 may be provided below the flexible display 230 on the front surface 200a of the electronic device 200. According to an embodiment, the first sensor module 204 and/or the second sensor module 217 may include at least one of a proximity sensor, an ambient sensor, a time of flight (TOF) sensor, an ultrasonic sensor, a fingerprint recognition sensor, a gesture sensor, a gyro sensor, a barometric pressure sensor, a magnetic sensor, an acceleration sensor, a grip sensor, a color sensor, an infrared (IR) sensor, a biometric sensor, a temperature sensor, and/or a humidity sensor.

According to various embodiments, the camera module 205, 216 may include a first camera module 205 provided on the front surface 200a of the electronic device 200 and a second camera module 216 provided on the rear surface 200b. According to an embodiment, the electronic device 200 may include the flash 218 located around the second camera module 216. According to an embodiment, the camera modules 205 and 216 may include one or a plurality of lenses, an image sensor, and/or an image signal processor. According to an embodiment, the first camera module 205 may be provided below the flexible display 230, and may be configured to photograph a subject through a portion of an active area of the flexible display 230. According to an embodiment, the flash 218 may include, for example, a light-emitting diode or a xenon lamp.

According to various embodiments, the first camera module 205 among the camera modules 205 and 216 and/or some sensor modules 204 among the sensor modules 204 and 217 may be provided to be in contact with the external environment through an opening or a transmission area perforated in the flexible display 230 in the internal space of the electronic device 200. According to an embodiment, an area that faces the first camera module 205 of the flexible display 230 may be formed as the transmission area having a specified transmittance as a portion of an area that displays content. According to an embodiment, the transmission area may be formed to have the transmittance in the range of about 5% to about 20%. This transmission area may include an area that overlaps an effective area (e.g., field of view area) of the first camera module 205 through which light passes to be imaged by the image sensor and to create an image. For example, the transmission area of the flexible display 230 may include an area with a lower pixel density and/or wiring density than a surrounding area. For example, the transmission area may replace the opening described above. For example, some camera modules 205 may include an under display camera (UDC). In some embodiments, some sensor modules 204 may be provided to perform the corresponding function without being visually exposed through the flexible display 230 in the internal space of the electronic device 200. According to an embodiment, the second camera module 216 among the camera modules 205 and 216 and/or some sensor modules 217 among the sensor modules 204 and 217 may be provided to correspond to the external environment through at least a portion (e.g., first rear cover 213) of the first housing 210 within the internal space of the electronic device 200. In this case, the second camera module 216 and/or some sensor modules 217 may be provided at specified locations of the first housing 210 that are visible from the outside at all times, regardless of the closed state and/or open state.

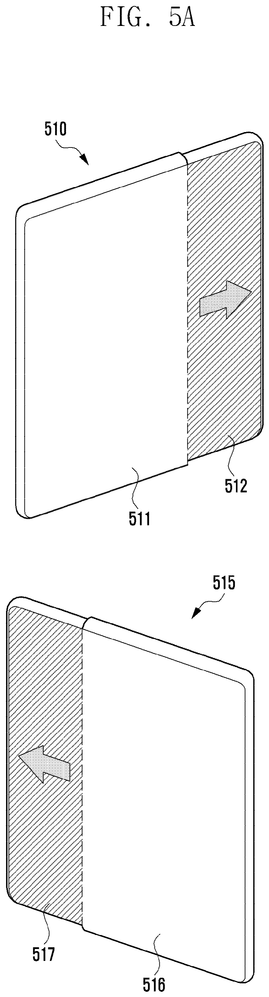

According to various embodiments, the electronic device 101, 200 may include the display having the structure of FIG. 2a to FIG. 2d. According to various embodiments, the electronic device 101 may include various types of extendable form factors of the display in addition to the form factors described in the description with reference to FIG. 2a to FIG. 2d. For example, the electronic device 101 may be implemented in various form factors based on a sliding (or rolling) method according to the form factor structure of the electronic device 101, 200 of FIG. 2a to FIG. 2d. The corresponding examples are illustrated in the drawings (e.g., FIG. 5a to FIG. 5g) described below.

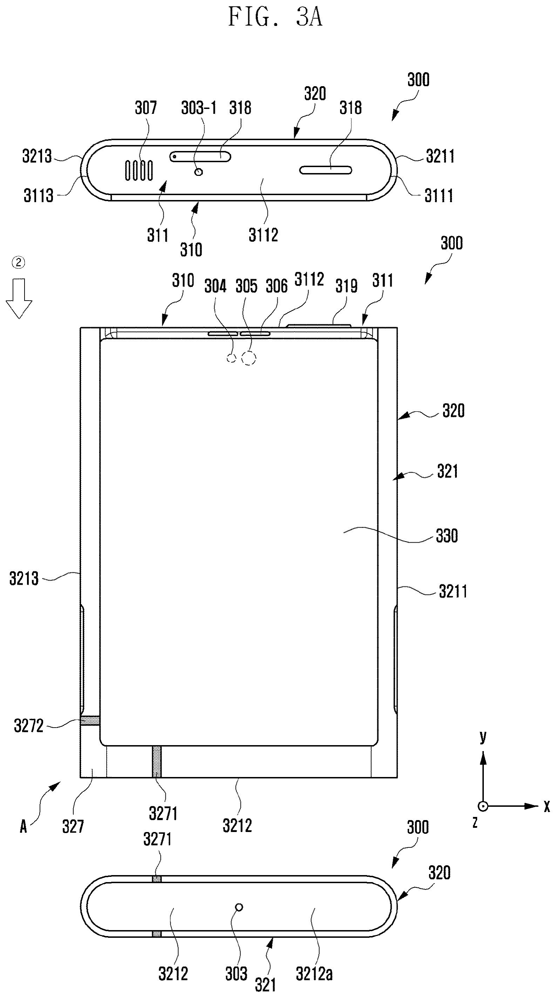

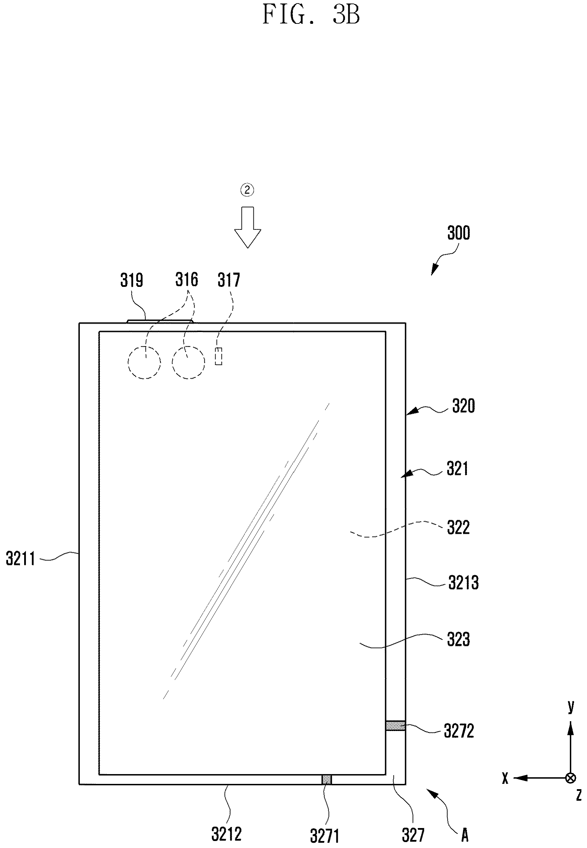

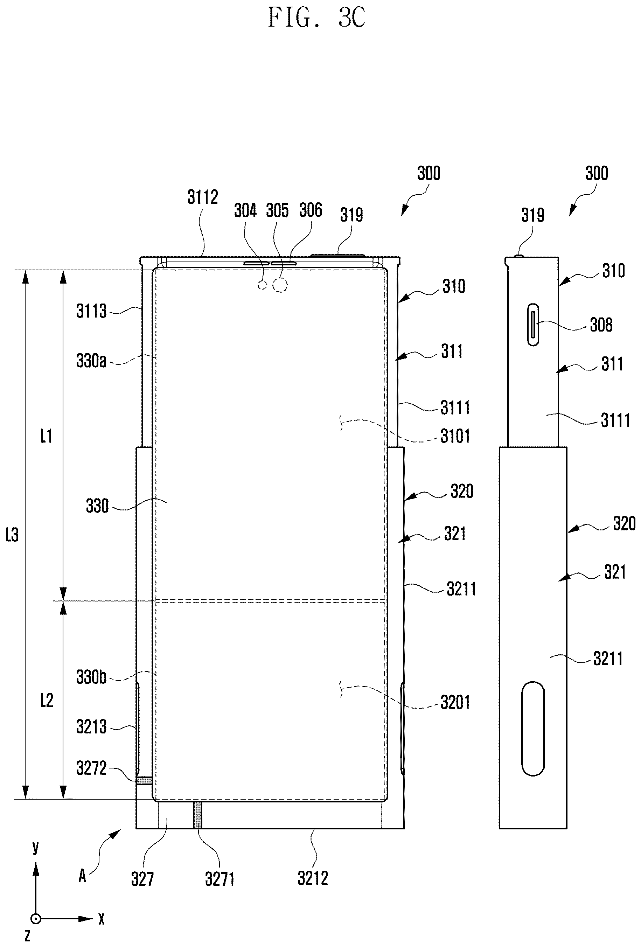

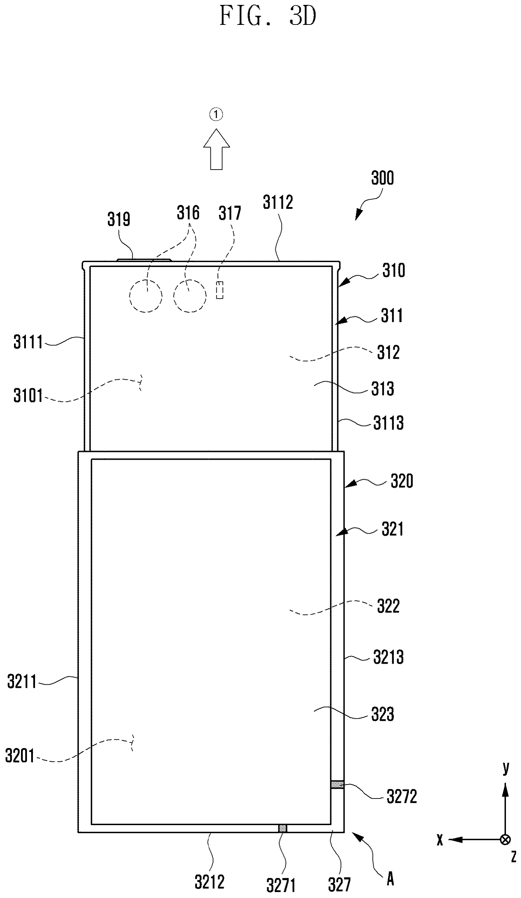

FIGS. 3a and 3b are views illustrating the front surface and the rear surface of an electronic device in a closed state of the electronic device having a form factor according to an embodiment. FIGS. 3c and 3d are views illustrating the front surface and the rear surface of an electronic device in an open state of the electronic device having a form factor according to an embodiment.

An electronic device 300 of FIG. 3a to FIG. 3d may be at least partially similar to the electronic device 101 of FIG. 1, may include the electronic device 101 of FIG. 1, or may further include other embodiments of the electronic device 101 of FIG. 1.

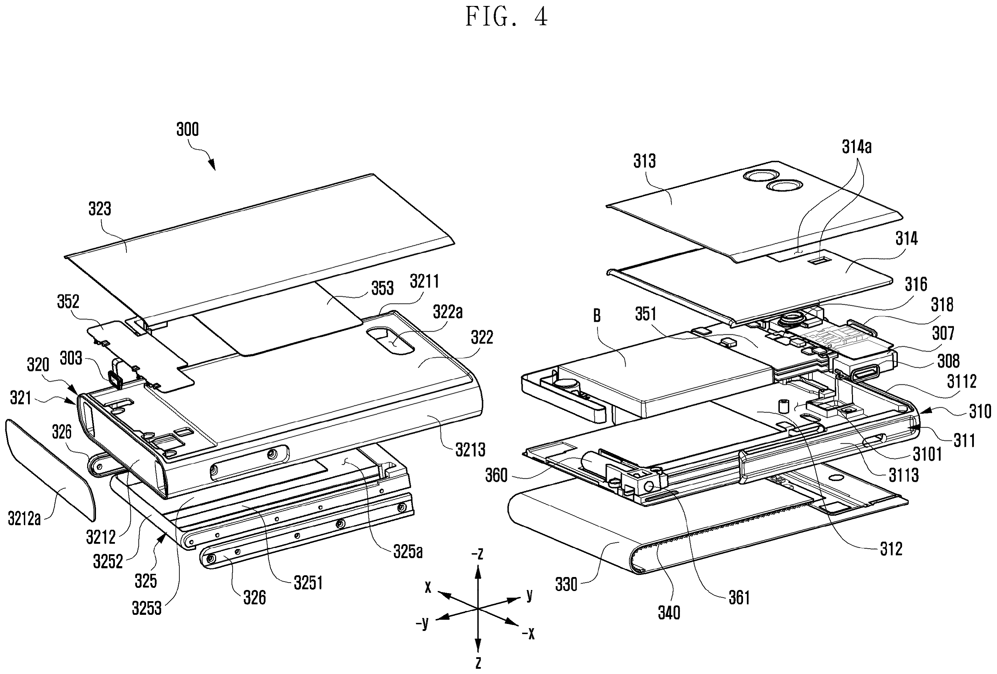

With reference to FIG. 3a to FIG. 3d, the electronic device 300 may include a first housing 310 (e.g., first housing structure, moving portion or slide housing), a second housing 320 (e.g., second housing structure, fixing portion or base housing) coupled to the first housing 310 to be movable (e.g., slidable) in a specified direction (e.g., direction ① or direction ②) (e.g., y-axis direction), and a flexible display 330 (e.g., extendable display or stretchable display) provided to be supported through at least a portion of the first housing 310 and the second housing 320. According to an embodiment, the electronic device 300 may be provided such that the first housing 310 may slide out in the first direction (direction ①), or may slide in in the second direction (direction ②) opposite to the first direction (direction ①), based on the second housing 320 held by the user. According to an embodiment, at least a portion of the first housing 310 that includes a first space 3101 may be changed to a closed state (or slide-in state) by being accommodated in a second space 3201 of the second housing 320. According to an embodiment, the electronic device 300 may include a bendable member (or bendable support member) (e.g., bendable member 340 of FIG. 4) (e.g., multi-joint hinge module or multi-bar assembly) that forms at least partially the same plane as at least a portion of the first housing 310 in an open state (or slide-in state) and is at least partially accommodated in the second space 3201 of the second housing 320. According to an embodiment, at least a portion of the flexible display 330 may be provided to be invisible from the outside by being accommodated in the internal space 3201 of the second housing 320 while being supported by the bendable member (e.g., bendable member 340 of FIG. 4) in the closed state. According to an embodiment, at least a portion of the flexible display 330 may be provided to be visible from the outside while being supported by the bendable member (e.g., bendable member 340 of FIG. 4) that forms at least partially the same plane as the first housing 310 in the open state.

According to various embodiments, the electronic device 300 may include the first housing 310 that includes a first lateral member 311 and the second housing 320 that includes a second lateral member 321. According to an embodiment, the first lateral member 311 may include a first side surface 3111 that has a first length along the first direction (e.g., y-axis direction), a second side surface 3112 that extends from the first side surface 3111 and has a second length shorter than the first length along the substantially vertical direction (e.g., x-axis direction), and a third side surface 3113 that extends from the second side surface 3112 to be substantially parallel to the first side surface 3111 and has the first length. According to an embodiment, the first lateral member 311) may be at least partially formed of a conductive material (e.g., metal). In some embodiments, the first lateral member 311 may be formed by combination of a conductive material and a non-conductive material (e.g., polymer). According to an embodiment, the first housing 310 may include a first support member 312 that extends from at least a portion of the first lateral member 311 to at least a portion of the first space 3101. According to an embodiment, the first support member 312 may be integrally formed with the first lateral member 311. In some embodiments, the first support member 312 may be configured separate from the first lateral member 311, and may be structurally combined with the first lateral member 311.

According to various embodiments, the second lateral member 321 may include a fourth side surface 3211 that at least partially corresponds to the first side surface 3111 and has a third length, a fifth side surface 3212 that extends from the fourth side surface 3211 in a direction substantially parallel to the second side surface 3112 and has a fourth length shorter than the third length, and a sixth side surface 3213 that extends from the fifth side surface 3212 to correspond to the third side surface 3113 and has the third length. According to an embodiment, the second lateral member 321 may be at least partially formed of a conductive material (e.g., metal). In some embodiments, the second lateral member 321 may be formed by combination of a conductive material and a nonconductive material (e.g., polymer). According to an embodiment, at least a portion of the second lateral member 321 may include a second support member 322 that extends to at least a portion of the second space 3201 of the second housing 320. According to an embodiment, the second support member 322 may be integrally formed with the second lateral member 321. In some embodiments, the second support member 322 may be configured separate from the second lateral member 321, and may be structurally combined with the second lateral member 321.

According to various embodiments, the first side surface 3111 and the fourth side surface 3211 may be slidably coupled to each other. According to an embodiment, the third side surface 3113 and the sixth side surface 3213 may be slidably coupled to each other. According to an embodiment, in the closed state, the first side surface 3111 may be provided to be substantially invisible from the outside by overlapping the fourth side surface 3211. According to an embodiment, in the closed state, the third side surface 3113 may be provided to be substantially invisible from the outside by overlapping the sixth side surface 3213. In some embodiments, in the closed state, at least a portion of the first side surface 3111 and the third side surface 3113 may be provided to be at least partially visible from the outside. According to an embodiment, in the closed state, the first support member 312 may be provided to be substantially invisible from the outside by overlapping the second support member 322. In some embodiments, in the closed state, a portion of the first support member 312 may be provided to be invisible from the outside by overlapping the second support member 322 and a remaining portion of the first support member 312 may be provided to be visible from the outside.

According to various embodiments, the electronic device 300 may include a first rear cover 313 coupled to the first housing 310 on the rear surface. According to an embodiment, the first rear cover 313 may be provided through at least a portion of the first support member 312. In some embodiments, the first rear cover 313 may be integrally formed with the first lateral member 311. According to an embodiment, the first rear cover 313 may be formed of polymer, coated or colored glass, ceramic, a metal (e.g., aluminum (Al), stainless steel (STS), or magnesium), or combination of at least two of the materials. In some embodiments, the first rear cover 313 may extend to at least a portion of the first lateral member 311. In some embodiments, at least a portion of the first support member 312 may be replaced with the first rear cover 313.

According to various embodiments, the electronic device 300 may include a second rear cover 323 coupled to the second housing 320 on the rear surface. According to an embodiment, the second rear cover 323 may be provided through at least a portion of the second support member 322. In some embodiments, the second rear cover 323 may be integrally formed with the second lateral member 321. According to an embodiment, the second rear cover 323 may be formed of polymer, coated or colored glass, ceramic, a metal (e.g., aluminum (Al), stainless steel (STS), or magnesium), or combination of at least two of the materials. In some embodiments, the second rear cover 323 may extend to at least a portion of the second lateral member 321. In some embodiments, at least a portion of the second support member 322 may be replaced with the second rear cover 323.

According to various embodiments, the electronic device 300 may include the flexible display 330 provided to be supported by at least a portion of the first housing 310 and the second housing 320. According to an embodiment, the flexible display 330 may include a first portion 330a (e.g., flat portion) that is visible from the outside at all times and a second portion 330b (e.g., bendable portion) that extends from the first portion 330a and at least partially slides in into the second space 3201 of the second housing 320 to be at least partially invisible from the outside in the closed state. According to an embodiment, the first portion 330a may be provided to be supported by the first housing 310, and the second portion 330b may be provided to be at least partially supported by the bendable member (e.g., bendable member 340 of FIG. 4). According to an embodiment, the second portion 330b of the flexible display 330 may extend from the first portion 330a while being supported by the bendable member (e.g., bendable member 340 of FIG. 4) in a state in which the first housing 310 is slid out in the first direction (direction ①), and may be provided to form substantially the same plane as the first portion 330a and to be visible from the outside. According to an embodiment, the second portion 330b of the flexible display 330 may be provided to be accommodated in the second space 3201 of the second housing 320 and to be invisible from the outside in a state in which the second housing 320 is slid in along the second direction (direction ②). Therefore, the electronic device 300 may induce a display area of the flexible display 330 to be variable as the first housing 310 moves in a sliding manner along a specified direction (e.g., y-axis direction) from the second housing 320.

According to various embodiments, the flexible display 330 may have a variable length in the first direction (direction ①) according to a slide movement of the first housing 310 that moves based on the second housing 320. For example, the flexible display 330 may have a first display area (e.g., area corresponding to first portion 330a) corresponding a first length (L1) in the closed state. According to an embodiment, the flexible display 330 may be extended to have a third display area (e.g., area that includes first portion 330a and second portion 330b) corresponding to a third length (L3) longer than the first length (L1) and greater than the first display area according to a slide movement of the first housing 310 that is additionally moved by a second length (L2) based on the second housing 320 in the open state.

According to various embodiments, the electronic device 300 may include at least one of an input device (e.g., microphone 303-1), a sound output device (e.g., call receiver 306 or speaker 307), a sensor module 304, 317, a camera module (e.g., first camera module 305 or second camera module 316), a connector port 308, a key input device 319, and an indicator (not shown) that are provided in the first space 3101 of the first housing 310. According to an embodiment, the electronic device 300 may include another input device (e.g., microphone 303) that is provided to the second housing 320. In another embodiment, the electronic device 300 may be configured such that at least one of the above-described components may be omitted or other components may be additionally included. In another embodiment, at least one of the above-described components may be provided in the second space 3201 of the second housing 320.

According to various embodiments, the input device may include the microphone 303-1). In some embodiments, the input device (e.g., microphone 303-1) may include a plurality of microphones provided to detect the direction of sound. The sound output device may include, for example, the call receiver 306 and the speaker 307. According to an embodiment, the speaker 307 may correspond to the outside through at least one speaker hole formed in the first housing 310 at a location (e.g., second side surface 3112) exposed to the outside at all times, regardless of the closed/open (or slide-in/slide-out) state. According to an embodiment, in the open state, the connector port 308 may correspond to the outside through a connector port hole formed in the first housing 310. In some embodiments, in the closed state, the connector port 308 may correspond to the outside through an opening formed in the second housing 320 and formed to correspond to the connector port hole. In some embodiments, the call receiver 306 may also include a speaker (e.g., piezo speaker) that operates without a separate speaker hole.

According to various embodiments, the sensor module 304, 317 may generate an electrical signal or a data value corresponding to an internal operating state of the electronic device 300 or an external environmental state. The sensor module 304, 317 may include, for example, the first sensor module 304 (e.g., proximity sensor or ambient sensor) provided on the front surface of the electronic device 300 and/or the second sensor module 317 (e.g., heart rate monitoring (HRM) sensor) provided on the rear surface of the electronic device 300. According to an embodiment, the first sensor module 304 may be provided below the flexible display 330 on the front surface of the electronic device 300. According to an embodiment, the first sensor module 304 and/or the second sensor module 317 may include at least one of a proximity sensor, an ambient sensor, a time of flight (TOF) sensor, an ultrasonic sensor, a fingerprint recognition sensor, a gesture sensor, a gyro sensor, a barometric pressure sensor, a magnetic sensor, an acceleration sensor, a grip sensor, a color sensor, an infrared (IR) sensor, a biometric sensor, a temperature sensor, and a humidity sensor.

According to various embodiments, the camera module may include the first camera module 305 provided on the front surface of the electronic device 300 and the second camera module 316 provided on the rear surface of the electronic device 300. According to an embodiment, the electronic device 300 may include a flash (not shown) located around the second camera module 316. According to an embodiment, the camera modules 305 and 316 may include one or a plurality of lenses, an image sensor, and/or an image signal processor. According to an embodiment, the first camera module 305 may be provided below the flexible display 330, and may be configured to photograph a subject through a portion of an active area (e.g., display area) of the flexible display 330.

According to various embodiments, the first camera module 305 among the camera modules and some sensor modules 304 among the sensor modules 304 and 317 may be provided to detect the external environment through the flexible display 330. For example, the first camera module 305 or some sensor modules 304 may be provided to be in contact with the external environment through a transmission area formed or an opening perforated in the flexible display 330 in the first space 3201 of the first housing 310. According to an embodiment, an area that faces the first camera module 305 of the flexible display 330 may be formed as a transmission area having a specified transmittance as a portion of an area that displays content. According to an embodiment, the transmission area may be formed to have the transmittance in the range of about 5% to about 20%. This transmission area may include an area that overlaps an effective area (e.g., field of view area) of the first camera module 305 through which light passes to be imaged by the image sensor and to create an image. For example, the transmission area of the flexible display 330 may include an area with a lower pixel density and/or wiring density than a surrounding area. For example, the transmission area may replace the above-described opening. For example, some camera modules 305 may include an under display camera (UDC). In some embodiments, some sensor modules 304 may be provided to perform the corresponding function without being visually exposed through the flexible display 330 in the internal space of the electronic device 300.

According to various embodiments, the electronic device 300 may include at least one antenna (e.g., antenna module 197 of FIG. 1) electrically connected to a wireless communication circuit (e.g., wireless communication module 192 of FIG. 1) provided to the second housing 310. According to an embodiment, the electronic device 300 may include a bezel antenna (A) provided through the conductive second lateral member 321 of the second housing 310. For example, the bezel antenna (A) may include a conductive portion 327 provided to at least a portion of the fifth side surface 3212 and the sixth side surface 3213 of the second lateral member 321, and electrically segmented through at least one segment 3271, 3272 formed of a nonconductive material (e.g., polymer). According to an embodiment, the wireless communication circuit (e.g., wireless communication module 192 of FIG. 1) may be configured to transmit or receive radio signals in specified at least one frequency band (e.g., about 800 MHz to 6000 MHz) (e.g., legacy band) through the conductive portion 327. According to an embodiment, the electronic device 300 may include a side surface cover 3212a provided on the fifth side surface 3212 to cover at least a portion of the at least segment 3271. In some embodiments, the bezel antenna (A) may be provided on at least one side surface among the second side surface 3112, the fourth side surface 3211, the fifth side surface 3212, and the sixth side surface 3213. In some embodiments, the electronic device 300 may further include at least one antenna module (e.g., 5G antenna module or antenna structure) provided in the internal space (e.g., first space 3101 or second space 3201) and provided to transmit or receive radio signals in a frequency band within the range of about 3 GHz to 100 GHz through another wireless communication circuit (e.g., wireless communication module 192 of FIG. 1).

According to various embodiments, a slide-in/slide-out motion of the electronic device 300 may be automatically performed. For example, the slide-in/slide-out motion of the electronic device 300 may be performed through a gearing operation of a driving motor (e.g., driving motor 360 of FIG. 4) including a pinion gear 361 provided in the first space 3101 of the first housing 310 and a rack gear (e.g., rack gear 3251 of FIG. 4) provided in the second space 3201 of the second housing 320 and engaged with the pinion gear 361. For example, in the case of detecting a triggering motion for changing from the closed state to the open state or changing from the open state to the closed state, the processor (e.g., processor 120 of FIG. 1) of the electronic device 300 may operate the driving motor (e.g., driving motor 360 of FIG. 4) provided inside the electronic device 300. According to an embodiment, the triggering motion may include selection (e.g., touch) on an object displayed on the flexible display 330 or manipulation of a physical button (e.g., key button) included in the electronic device 300.

FIG. 4 is an exploded perspective view of an electronic device having a form factor according to an embodiment.

When describing the electronic device 300 of FIG. 4, like reference numerals are assigned to components that are substantially the same as those of the electronic device 300 of FIG. 3a to FIG. 3d and a detailed description thereof may be omitted.

With reference to FIG. 4, the electronic device 300 may include the first housing 310 that includes the first space 3101, the second housing 320 movably (e.g., slidably) coupled to the first housing 310 and including a second space (e.g., second space 3201 of FIG. 3c), the bendable member 340 at least partially rotatably provided in the second space 3201, the flexible display 330 provided to be supported by at least a portion of the bendable member 340 and the first housing 310, and a driving module that drives the first housing 310 in a slide-in direction (e.g., -y-axis direction) and/or a slide-out direction (e.g., y-axis direction) from the second housing 320. According to an embodiment, the driving module may include the driving motor 360 provided in the first space 3101 and including the pinion gear 361 and the rack gear 3251 provided to engage with the pinion gear 361 in the second space 3201. According to an embodiment, the driving module may further include a reduction module provided to decrease a rotational speed and to increase a driving power by coupling to the driving motor 360. According to an embodiment, the driving motor 360 may be provided to be supported through at least a portion of the first support member 312 in the first space 3101 of the first housing 310. According to an embodiment, the driving motor 360 may be fixed at an end portion (e.g., edge) of the first support member 312 in the slide-in direction (e.g., -y-axis direction) in the first space 3101.

According to various embodiments, the electronic device 300 may include a plurality of electronic parts provided in the first space 3101. According to an embodiment, the plurality of electronic parts may include a first substrate 351 (e.g., main board), the camera module 316 provided around the first substrate 351, the socket module 318 (e.g., SIM tray), the speaker 307, the connector port 308, and the battery (B). According to an embodiment, the plurality of electronic parts may be provided around the first substrate 351 in the first space 3101 of the first housing 310 together with the driving motor 360, so may be efficiently electrically connected.

According to various embodiments, the electronic device 300 may include a rear bracket 314 provided to cover at least a portion of the plurality of electronic parts between the first support member 312 and the first rear cover 313 of the first housing 310. According to an embodiment, the rear bracket 314 may be structurally combined to at least a portion of the first support member 312. In some embodiments, the rear bracket 314 may be omitted. According to an embodiment, the rear bracket 314 may be provided to cover the plurality of electronic parts and to support the first rear cover 313. According to an embodiment, the rear bracket 314 may include a notch area 314a or an opening 314a (e.g., through-hole) formed in an area corresponding to the camera module 316 and/or sensor module (e.g., sensor module 317 of FIG. 3d). According to an embodiment, the camera module 316 and/or the sensor module 317 may be provided to detect an external environment through the notch area 314a or the opening 314a. According to an embodiment, the first rear cover 313 may be processed such that at least an area corresponding to the camera module 316 and/or the sensor module 317 may be processed to be transparent . In some embodiments, the camera module 316 and/or the sensor module 317 may be configured to operate only when the electronic device 300 is in the open state.

According to various embodiments, the electronic device 300 may include a plate-type support bracket 325 (e.g., display support bar (DSB)) provided in the second space 3201 of the second housing 320 and slidably coupled to at least a portion of the first support member 312. According to an embodiment, the support bracket 325 may include an opening 325a with a specified size. According to an embodiment, the support bracket 325 may include a support portion 3252 having a curved outer surface to support the back surface of the bendable member 340 that is provided at one end and bends during a sliding motion. According to an embodiment, the support bracket 325 may include a support plate 3253 formed to support the back surface of the bendable member 340 in the open state by extending from at least a portion of the support portion 3252 to at least a portion of the opening 325a. According to an embodiment, the support bracket 325 may include the rack gear 3251 that traverses the opening 235a and is fixed to have a length parallel to the sliding direction. In some embodiments, the rack gear 3251 may be integrally formed with the support bracket 325. According to an embodiment, the electronic device 300 may include a single pair of guide rails that are provided on both side surfaces of the support bracket 325 to guide both ends of the bendable member 340 in the sliding direction.

According to various embodiments, when the electronic device 300 is in the closed state in the second support member 322, the second housing 320 may include an opening 322a (e.g., through-hole) provided in an area corresponding to the camera module 316 and/or the sensor module 317 provided to the first housing 310. According to an embodiment, when the electronic device 300 is in the closed state, the camera module 316 and/or the sensor module 317 may detect the external environment through the opening 322a formed in the second housing 320. In this case, at least an area of the second rear cover 323 corresponding to the camera module 316 and/or the sensor module 317 may be processed to be transparent.

According to various embodiments, the electronic device 300 may include a second substrate 352 and an antenna member 353 provided in space between the second support member 322 and the second rear cover 323 of the second housing 320. According to an embodiment, the second substrate 352 and the antenna member 353 may be electrically connected to the first substrate 351 through at least one electrical connection member (e.g., flexible printed circuit board (FPCB) or flexible RF cable (FRC)). In some embodiments, the antenna member 353 may be electrically connected to the second substrate 352 and accordingly may be electrically connected to the first substrate 351 through the second substrate 352.

According to various embodiments, the electronic device 101, 300 may include the display having the structure of FIG. 3a to FIG. 3d. According to various embodiments, the electronic device 101 may include various types of extendable form factors of the display in addition to the form factors described in the description with reference to FIG. 3a to FIG. 3d. For example, the electronic device 101 may be implemented in various form factors based on a sliding (or rolling) method according to the form factor structure of the FIG. 3a to FIG. 3d. The corresponding examples are illustrated in the drawings (e.g., FIG. 5a to FIG. 5g) described below.

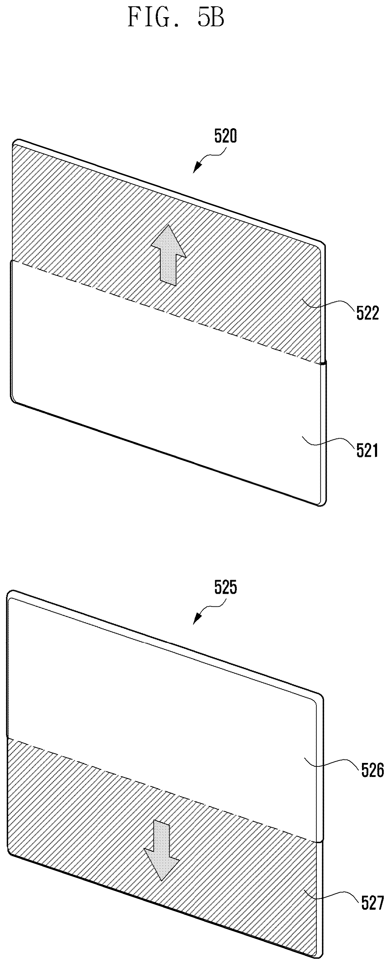

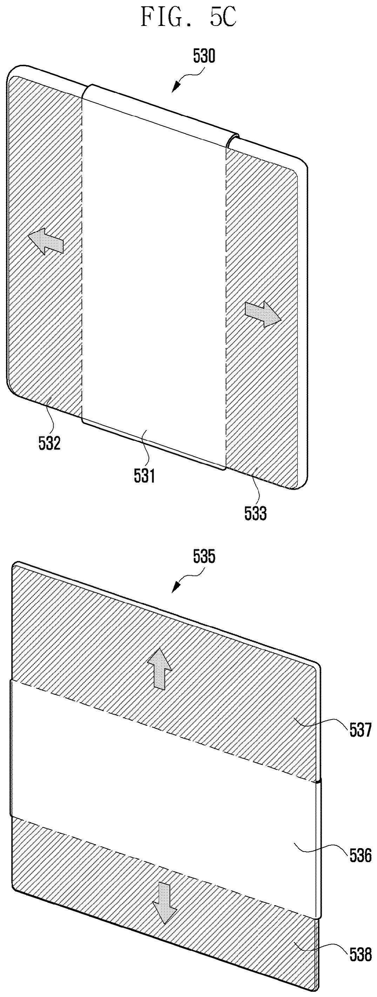

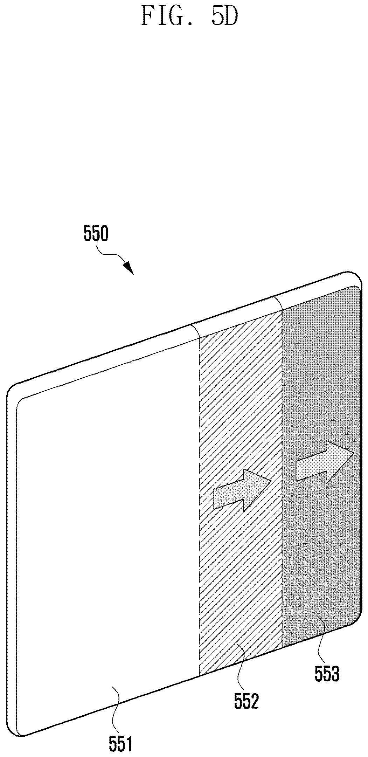

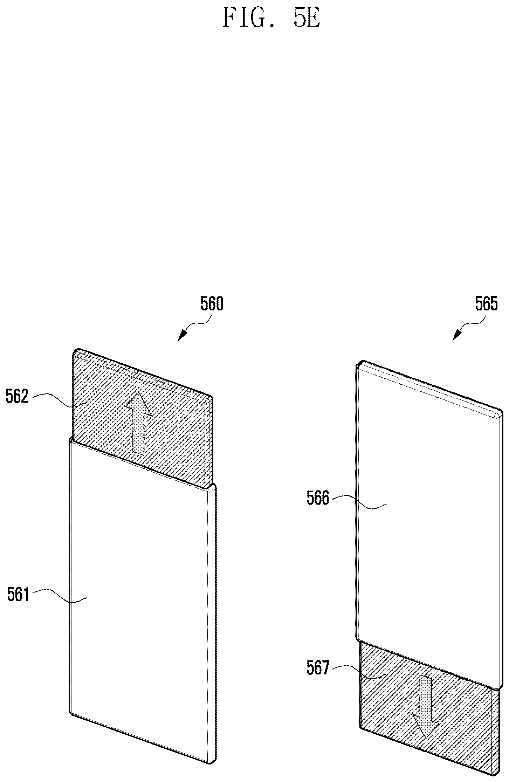

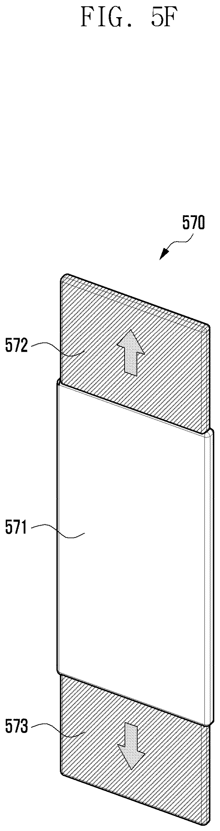

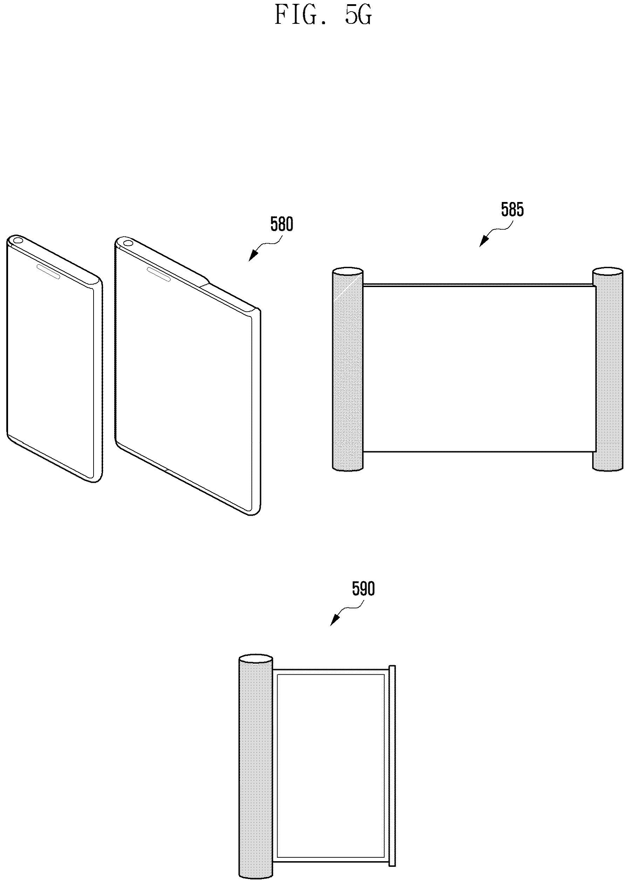

FIGS. 5a, 5b, 5c, 5d, 5e, 5f, and 5g are views illustrating various embodiments of a structure of an extendable display of an electronic device according to an embodiment.

With reference to FIG. 5a to FIG. 5g, an electronic device (e.g., electronic device 101 of FIG. 1) according to various embodiments may include a housing structure in which a display may be extended in at least one of up, down, left, and right directions. For example, FIG. 5a to FIG. 5g may represent examples of various form factors of the electronic device that includes the display with a variable display area according to an embodiment.

As illustrated in FIG. 5a, the electronic device may be implemented to perform a unidirectional sliding motion. For example, the electronic device may include a display 510 that is extendable in a first direction (e.g., right direction). For example, in a first state (e.g., closed state or reduced state) in which the display 510 is not extended, a screen may be displayed through the first display area 511, and a second display area 512 may be accommodated in a housing and be in an inactive state.

According to an embodiment, the electronic device may transition from the first state to a second state (e.g., open state or extended state) by a user manipulation or a preset input.

According to an embodiment, when the electronic device transitions from the first state to the second state, the second display area 512 may slide out in the first direction and may be exposed to the outside. The electronic device may change the second display area 512 to an active state in the second state in which the display 510 is extended, and may display the screen through the first display area 511 and the second display area 512. According to another embodiment, if a second housing slides in one direction (e.g., first direction) relative to a first housing when the electronic device transitions from the first state to the second state, at least a portion of the display 510 accommodated in the first housing (e.g., corresponding to left partial area of first display area 511 in illustrated drawing) may slide out and the display area of the display 510 may be extended. If the second housing slides in the second direction relative to the first housing when the electronic device transitions from the second state to the first state, a portion of the display 510 (e.g., corresponding to left partial area of first display area 511 in illustrated drawing) may slide in into the first housing and the display area of the display 510 may be reduced. According to an embodiment, in the case of the electronic device, the display area (e.g., first display area 511) of the display 510 may have, for example, a ratio of 4:3 in the first state (e.g., closed state), and the display area (e.g., first display area 511 and second display area 512) of the display 510 may be extended to, for example, a ratio of 21:9 in the second state (e.g., open state).

According to another embodiment, the electronic device may include a first display area 516 that displays the screen in the first state (e.g., closed state) in which a display 515 is not extended and a second display area 517 that is extendable in the second direction (e.g., left direction) and displays the screen in the second state (e.g., open state) in which the display 515 is extended.

As illustrated in FIG. 5b, the electronic device may include a display that is extendable in a third direction (e.g., up direction) or a fourth direction (e.g., down direction).

According to an embodiment, the electronic device may include a first display area 521 that displays the screen in the first state in which a display 520 is not extended and a second display area 522 that is extendable in the third direction and displays the screen in the extended second state. According to another embodiment, the electronic device may include a first display area 526 that displays the screen in the first state in which a display 525 is not extended and a second display area 527 that is extendable in the fourth direction and displays the screen in the extended second state.

As illustrated in FIG. 5c, the electronic device may include a display that is extendable in both left and right directions or both up and down directions.

According to an embodiment, the electronic device may include a first display area 531 that displays the screen in the first state in which a display 530 is not extended, a second display area 532 that is extendable in the first direction and displays the screen in the extended second state, and a third display area 533 that is extendable in the second direction and displays the screen in the extended second state. In this case, at least one of the second display area 532 and the third display area 533 may be extended according to a user manipulation, a preset input, or type of content being output (e.g., video, image, text, or game).

According to an embodiment, the electronic device having the housing structure illustrated in FIG. 5c may be implemented to perform a bi-directional sliding motion. For example, in the case of the electronic device, the display area (e.g., first display area 531) of the display 530 may have, for example, a ratio of 21:9 in the first state (e.g., closed state), and the display area (e.g., first display area 531, second display area 532, and third display area 533) of the display 530 may extend at, for example, a ratio of 4:3 in the second state (e.g., open state). If the second housing and the third housing slide in, for example, the first direction (e.g., left direction) and the second direction (e.g., right direction), respectively, relative to the first housing when the electronic device transitions from the first state to the second state, a portion (e.g., second display area 532) of the display 530 accommodated in the first housing may slide out in the first direction and another portion (e.g., third display area 533) may slide out in the second direction, so the display area of the display 530 may be extended. Although not illustrated, in the electronic device, only a portion (e.g., first display area 531 and second display area 532) of the display 530 may be extended in the first direction, or only another portion (e.g., first display area 531 and third display area 533) of the display 530 may extended in the second direction.

According to another embodiment, the electronic device may include a first display area 536 that displays the screen in the first state in which a display 535 is not extended, a second display area 537 that is extendable in the third direction and displays the screen in the extended second state, and a third display area 538 that is extendable in the fourth direction and displays the screen in the extended second state.

According to various embodiments, the electronic device may include a display that is extendable both in up direction (or down direction) and right direction (or left direction).

As illustrated in FIG. 5d, the electronic device may include a display that is extendable in a stepwise manner, and the display may be extended only partially.

According to an embodiment, the electronic device may include a first display area 551 that displays the screen in the first state in which a display 550 is not extended, a second display area 552 that is extendable in the first direction (e.g., right direction) and displays the screen in the extended second state, and a third display area 553 that is additionally extendable in the first direction (e.g., right direction) and displays the screen in the additionally extended third state.

According to an embodiment, the electronic device may display the screen by activating only the second display area 552 of the display 550. According to an embodiment, the electronic device may display the screen by activating all of the second display area 552 and the third display area 553 of the display 550. For example, the display 550 may be fixed through a support structure when extended to the second display area 552, and may extend from the second display area 552 to the third display area 553 according to an additional force.

As illustrated in FIG. 5e, the electronic device may include a display that is extendable in the third direction (e.g., up direction) or the fourth direction (e.g., down direction). According to an embodiment, the electronic device illustrated in FIG. 5e may include a bar type form factor in the closed state.

According to an embodiment, the electronic device may include a first display area 561 that displays the screen in the first state in which a display 560 is not extended and a second display area 562 that is extendable in the third direction and displays the screen in the extended second state. According to another embodiment, the electronic device may include a first display area 566 that displays the screen in the first state in which a display 565 is not extended and a second display area 567 that is extendable in the fourth direction and displays the screen in the extended second state.

As illustrated in FIG. 5f, the electronic device may include a display that is extendable in both up and down directions. According to an embodiment, the electronic device illustrated in FIG. 5f may include a bar-type form factor in the closed state.

According to an embodiment, the electronic device may include a first display area 571 that displays the screen in the first state in which a display 570 is not extended, a second display area 572 that is extendable in the third direction and displays the screen in the extended second state, and a third display area 573 that is extendable in the fourth direction and displays the screen in the extended second state. In this case, at least one of the second display area 532 and the third display area 533 may be extended according to a user manipulation, a preset input, or type of content being output (e.g., video, image, text, or game).

The electronic device 101 in various embodiments described below may include a display having at least one structure among FIG. 2a to FIG. 5f. According to various embodiments, various extendable form factors of various types may be included in addition to the form factors described with reference to FIG. 2a to FIG. 5f.

According to various embodiments, the electronic device 101 may be implemented in various form factors according to various sliding motions of the display in addition to form factors of the electronic device of FIG. 5a to FIG. 5f. The corresponding example is illustrated in FIG. 5g.

For example, as illustrated in FIG. 5g, the electronic device may include various form factors, such as a rollable (or slidable) device 580, 585, 590 that may extend an area of the display in a rolling manner and/or a sliding manner. According to an embodiment, as illustrated in FIG. 5g, the electronic device may be implemented in various forms and the display may be provided in various manners depending on the implementation form of the electronic device.

According to an embodiment, the electronic device (e.g., 580, 585, 590) may include a roll-up display (e.g., rollable display) within a housing. According to an embodiment, the electronic device may refer to an electronic device that may be at least partially wound or rolled and stored inside a housing (not shown) due to bending deformation of the display. Depending on necessity of the user, the electronic device may extend and use a screen display area by unfolding the display or by exposing a wider area of the display to the outside. For example, the electronic device 101 may have a display area exposed to the outside, which may vary depending on the extent to which the user unfolds the display.

According to an embodiment, the electronic device 101 includes a housing structure for protecting a display rolled into a circular shape, and may operate in a structure in which the display is open (e.g., extended) inside the housing. For example, as exemplified in FIG. 5g, at least a portion of the display may be stored within a cylindrical housing or a flat housing.

According to various embodiments, the electronic device 101 may be transitioned manually by the user or may be automatically transitioned through a driving mechanism (e.g., driving motor, reduction gear module and/or gear assembly) provided inside the housing when changing the state of the display (e.g., open state, intermediated state, closed state). According to an embodiment, an operation of the driving mechanism may be triggered based on a user input. According to an embodiment, the user input for triggering the operation of the driving mechanism may include a touch input, a force touch input, and/or a gesture input through the display module 160. For example, if signals are generated from various sensors such as a pressure sensor, the electronic device 101 may transition from the closed state to the open state, or from the open state to the closed state. For example, when carrying or holding the electronic device 101 with a hand, a squeeze gesture that a portion of the hand (e.g., palm or finger) pressurizes a specified section of the electronic device 101 may be detected through a sensor and, in response thereto, the electronic device 101 may transition from the closed state to the open state, or from the open state to the closed state. In another embodiment, the user input for triggering the operation of the driving mechanism may include a sound input (or voice input) or an input of a physical button visually exposed to the outside of the housing.

As exemplified above, the electronic device 101 according to an embodiment of the disclosure may be implemented as a device that may change a display area of the display in various rolling (or sliding) ways.

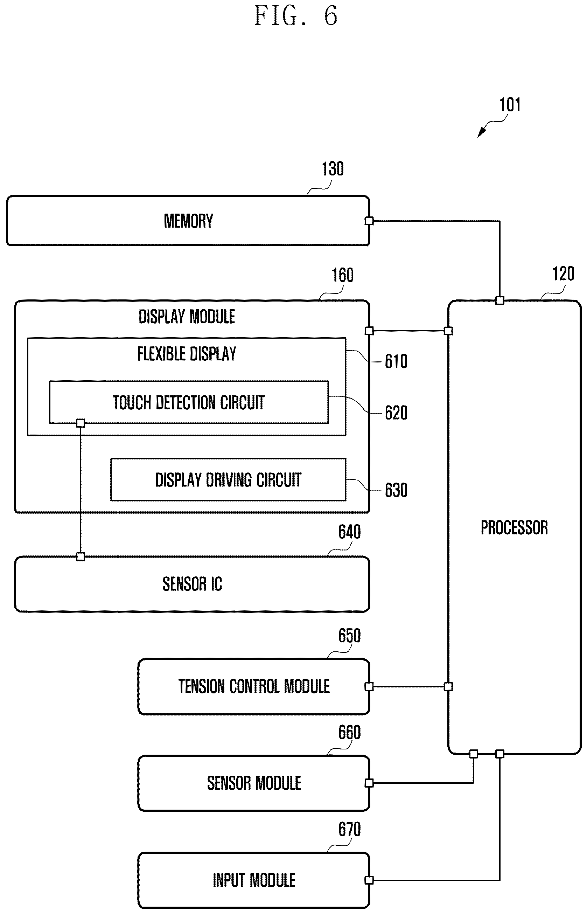

FIG. 6 is a diagram schematically illustrating a constitution of an electronic device according to an embodiment of the disclosure.

With reference to FIG. 6, in an embodiment, the electronic device 101 (e.g., electronic device 200, 300) may include the processor 120 (e.g., processor 120 of FIG. 1), the memory 130 (e.g., memory 130 of FIG. 1), the display module 160 (e.g., display module 160 of FIG. 1), a sensor integrated circuit (IC) 640, a tension control module 650, a sensor module 660 (e.g., sensor module 176 of FIG. 1), and/or an input module 670 (e.g., input module 150 of FIG. 1). According to an embodiment, the electronic device 101 may be the same as the electronic device of FIG. 1 or may be implemented by including at least some of the components of the electronic device of FIG. 1 or by additionally including other components.

According to an embodiment, the electronic device 101 may include the first housing 210, 410, and the second housing 220, 420 configured to couple to the first housing 210, 410. in a first state (e.g., closed state) of the electronic device 101 and to slidably move in a specified direction from the first housing 220, 420 in the first state and to support a second state of at least partially extending the display of the electronic device 101.

According to an embodiment, the display module 160 may include a flexible display 610 (e.g., flexible display 230, 430) of which a display area partially varies in conjunction with a slide movement (e.g., slide-in motion or slide-out motion) of the second housing 220, 420 and a display driving circuitry 630 for driving the display module 160.

According to an embodiment, the flexible display 610 may include a first display area (e.g., fixed area) that is fixedly provided to the first housing 210, 410 and a second display area (e.g., extended area) that is rollably mounted to the second housing 220, 420. In an embodiment, the first display area may be visually exposed in the first state (e.g., closed state or slide-in state) and/or the second state (e.g., open state or slide-ou state) of the electronic device 101. In an embodiment, the second display area may be visually exposed in the second state of the electronic device 101, and may partially extend an area of the flexible display 610 according to the slide movement of the second housing 220, 420.

According to an embodiment, the flexible display 610 (e.g., rollable display or slidable display) may be implemented such that a portion thereof (e.g., bendable section) may slide out from the internal space of the second housing 220, 420 of the electronic device 101. For example, when the electronic device 101 transitions from the closed state (or slide-in state) to the open state (e.g., slide-out state) or partially open state, the bendable section of the flexible display 610 may slidably withdraw from the internal space of the electronic device 101, which may cause the screen to be entirely or partially extended. When the electronic device 101 transitions from the open state or the partially open state to the closed state, the bendable section may slidably insert into the internal space of the electronic device 101, which may cause the screen to be entirely or partially reduced.

According to an embodiment, the display driving circuitry 630 may include, for example, a display drive integrated circuit (DDI) or a DDI chip as a circuit for controlling the flexible display 610. According to an embodiment, the display driving circuitry 630 may include a touch DDI (TDDI) provided in a chip on panel (COP) or chip on film (COF) manner. The display driving circuitry 630 may receive a signal commanded by the processor 120 and may control at least one display of the flexible display 610 to display a corresponding screen. The display driving circuitry 630 may serve as a signal path between the flexible display 610 and the processor 120, and may control pixels through thin film transistors (TFTs) within the flexible display 610. For example, the display driving circuitry 630 has the function of turning on or off pixels included in the flexible display 610, and may be electrically connected to a gate electrode of the TFT.

The display driving circuitry 630 has the function of creating a color difference by adjusting the amount of red, green, blue (RGB) signals of a pixel and may be electrically connected to a source electrode of the TFT. The TFT may include a gate line (or scan line) that electrically connects the display driving circuitry 630 and the gate electrode of the TFT and a data line (or source line) that electrically connects the display driving circuitry 630 and the source electrode of the TFT. According to various embodiments, the display driving circuitry 630 may also operate in response to a red, green, blue, white (RGBW) method in which a white pixel is added to RGB pixels.

According to an embodiment, the display driving circuitry 630 may be a DDI package. The DDI package may include a DDI (or DDI chip), a timing controller (T-CON), graphics RAM (GRAM), or a power driver (power generating circuits). According to an embodiment, the graphics RAM may be omitted, or a memory provided separate from the display driving circuitry 630 may be utilized. The timing controller may convert a data signal input from the processor 120 to a signal required by the DDI. The timing controller may serve to adjust input data information to a signal suitable for a gate driver (or gate IC) and a source driver (or source IC) of the DDI. The graphics RAM may serve as a memory to temporarily store data to be input the driver (or IC) of the DDI. The graphics RAM may store the input signal and then may send it back to the driver of the DDI, and, here, may process the signal in conjunction with the timing controller. The power driver may generate voltage for driving the flexible display 610 and may supply the voltage necessary for the gate driver and the source driver of the DDI.

According to an embodiment, the DDI may be implemented to include one or more. According to an embodiment, the electronic device 101 may include a single DDI that is operatively or electrically connected to the processor 120 and the flexible display 610 (e.g., first display area and second display area). For example, the first display area and the second display area may be connected to a single DDI. According to an embodiment, the electronic device 101 may include two DDIs (e.g., first DDI, second DDI) that are operatively or electrically connected to the processor 120 and the flexible display 610. For example, the first display area may be connected to the first DDI, and the second display area may be connected to the second DDI. According to an embodiment, the first DDI and the second DDI may be operatively or electrically connected to each other.

According to an embodiment, the flexible display 610 may include a touch detection circuit 620 (or touch sensor). The touch detection circuit 620 may include, for example, a transmitter (Tx) that includes a plurality of first electrode lines (or plurality of driving electrodes) and a receiver (Rx) that includes a plurality of second electrode lines (or plurality of receiving electrodes).

According to an embodiment, the sensor IC 640 may supply current (e.g., alternating current) to the touch detection circuit 620, and an electric field may be formed between the transmitter and the receiver of the touch detection circuit 620. The sensor IC 640 may convert an analog signal acquired through the touch detection circuit 620 to the digital signal. For example, if a finger contacts the screen or arrives within a critical distance from the screen, the change in the electric field may occur, which may lead to changing capacitance related thereto (or voltage drop). When the change in capacitance is greater than or equal to a threshold, the sensor IC 640 may generate an electrical signal about coordinates on the screen as a valid touch input or a hovering input and may output the same to the processor 120. The processor 120 may recognize coordinates on the screen based on the electrical signal received from the sensor IC 640.

According to an embodiment, the sensor IC 640 may include a touch controller integrated circuit (IC). The touch controller IC may perform various functions, such as noise filtering, noise removal, or sensing data extraction, in relation to the touch detection circuit 620. According to an embodiment, the touch controller IC may include various circuits, such as an analog-digital converter (ADC), a digital signal processor (DSP), and/or a micro control unit (MCU).

According to an embodiment, the tension control module 650 may be included in a tension structure that provides tension to, for example, the flexible display 610, or may be connected to the tension structure. The tension control module 650 may adjust the tension applied to the flexible display 610 according to a control signal from the processor 120.

According to an embodiment, the sensor module 660 (e.g., sensor module 176 of FIG. 1) may, for example, measure a physical quantity or detect an operating status of the electronic device 101 and may generate an electrical signal or a data value corresponding thereto. According to an embodiment, the sensor module 660 may include, for example, a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an ambient sensor. According to an embodiment, the sensor module 660 may further include at least one control circuit to control at least one sensor included therein.

According to an embodiment, the sensor module 660 may be a device that detects a tilt angle of the electronic device 101 with respect to the ground surface and/or direction in which the electronic device 101 faces in a 3D coordinate system using sensing data acquired by at least one sensor among a plurality of sensors. However, without limited thereto, various sensors may be used to acquire information (e.g., azimuth) on the tilt angle of the electronic device 101. For example, the acceleration sensor may sense information on a linear movement of the electronic device 101 and/or acceleration of the electronic device 101 along three axes. The gyro sensor may sense information related to the rotation of the electronic device 101, and a geomagnetic sensor may sense information on the direction in which the electronic device 101 faces within an absolute coordinate system. According to an embodiment, the processor 120 may use 9-axis motion data acquired using the gyro sensor and the geomagnetic sensor. For example, the processor 120 may form the virtual space based on the azimuth (e.g., yaw, pitch and/or roll values) measured from the 9-axis motion data, and may divide one area of the virtual coordinate space into landscape range and another area thereof into portrait range.

According to an embodiment, the input module 670 (e.g., input module 150 of FIG. 1) may receive, for example, a user input. The input module 670 may include, for example, a key input device. According to an embodiment, the key input device may include various types of keys, for example, a physical key, a capacitive key, and an optical key. The input module 670 may include various other types of user interfaces (e.g., keypad or keyboard).

According to an embodiment, the memory 130 may store a variety of configuration information and/or instructions related to operating the display module 160 according to the slide-in state (or closed state), the partially open state (e.g., intermediate state), and the slide-out state (or open state) of the electronic device 101. For example, the memory 130 may include at least one configuration such that a screen display differently operates depending on the closed state, the partially open state, and the open state. For example, the memory 130 may include at least one instruction that identifies transition between the slide-in state (closed state), the partially open state, and the slide-out state (open state) and processes the corresponding display screen in the identified state. For example, the memory 130 may include an instruction that causes the processor 120 to adjust the tension of the flexible display 610 using the tension control module 650.

According to an embodiment, the memory 130 may store a variety of data used by the electronic device 101. In an embodiment, the data may include input data or output data related to an application (e.g., program 140 of FIG. 1) and an instruction related to the application. In an embodiment, the data may include a variety of sensor data (e.g., acceleration sensor data, gyro sensor data, and/or hall sensor data) acquired from the sensor module 660. In an embodiment, the data may include a variety of reference data configured in the memory 130 to identify a specified state (e.g., first state (e.g., closed state) or second state (e.g., partially open state or open state)) of the electronic device 101. In an embodiment, the data may include a variety of configuration information configured in the memory 130 for operation control related to correcting the user input (e.g., touch) based on the sliding motion (e.g., slide-out or slide-in motion) of the flexible display 610. In an embodiment, the data may include a variety of learning data acquired based on learning of the user through interaction with the user.

According to an embodiment, the memory 130 may store instructions that, when executed, cause the processor 120 to operate. For example, the application may be stored as software (e.g., program 140 of FIG. 1) on the memory 130, and may be executed by the processor 120. According to an embodiment, the application may be various applications that may provide various functions (e.g., various functions executable on electronic device 101, such as call, game, browser, mail, media playback, photography, and/or messenger) on the electronic device 101. According to an embodiment, the application may be provided on-demand and may include a keyboard (or keypad) (e.g., screen keyboard) that interacts with the above-described various functions.

According to an embodiment, the processor 120 may perform an application layer processing function requested by the user of the electronic device 101. According to an embodiment, the processor 120 may provide a function control and command for various blocks of the electronic device 101. According to an embodiment, the processor 120 may perform calculation or data processing related to control and/or communication of each of components of the electronic device 101. For example, the processor 120 may include at least a portion of constitutions and/or functions of the processor 120 of FIG. 1. The processor 120 may be operatively connected to, for example, the components of the electronic device 101. The processor 120 may load commands or data from other components of the electronic device 101 to the memory 130, may process the commands or the data stored in the memory 130, and may store resulting data.

According to an embodiment of the disclosure, the processor 120 may include processing circuitry and/or executable program elements. According to an embodiment, the processor 120 may control (or process) an operation related to supporting application-related functions based on the specified state of the electronic device 101 and/or the change in the state from the specified state based on the processing circuitry and/or the executable program elements.

According to an embodiment, the processor 120 may display an execution screen of the application in response to a slide-out amount of the display (e.g., second display area) in the open state or the partially open state of the flexible display 610 (e.g., rollable display that supports first display area and second display area that extends (or extends) from first display area). According to an embodiment, the processor 120 may detect the state change (e.g., sliding motion) of the flexible display 610, and may determine a display screen area based on detection of the stage change of the flexible display 610. According to an embodiment, the processor 120 may control the display module 160 to construct and display the execution screen based on the display screen area.

According to an embodiment, the processor 120 may control the display module 160 to display the screen through the first display area (e.g., fixed area or basic area) of the flexible display 610 in the first state (e.g., slide-in state (or closed state)). According to an embodiment, the processor 120 may control the display module 160 to display the screen through the first display area and the second display area (e.g., variable area or extended area) of the flexible display 610 in the second state (e.g., partially open state or slide-out state (or open state)).

According to an embodiment, when the second display area slides (rolls) according to a slide movement of the second housing 220, 420, and the electronic device 101 forms the second state (e.g., partially open state or slide-out state), the processor 120 may control the display module 160 to display the screen in conjunction with the first display area and the second display area (e.g., extended area) in the second state or to display the screen through the second display area independently from the first display area.

According to an embodiment, the processor 120 may display a first execution screen based on the first display area of the display (e.g., flexible display 610) and may detect (detect sliding) a change in the state of the display while displaying the first execution screen. According to an embodiment, the processor 120 may control the display module 160 to maintain the first execution screen displayed through the first display area and to display the second execution screen through the second display area based on detection of the state change. According to an embodiment, the processor 120 may control the display module 160 to change (e.g., extend) and display the first execution screen in response to interaction between the first display area and the second display area.

According to an embodiment, the processor 120 may control the display module 160 such that a screen display according to the slide-in state, the partially open state, and the slide-out state of the display may operate differently based on the type of the running application and/or configuration of the electronic device 101 by user designation.

According to an embodiment, the processor 120 may control (or process) an operation related to adaptively correcting a user input (e.g., touch) to a sliding motion (e.g., slide-out or slide-in motion) of the display (e.g., flexible display 610) based on processing circuitry and/or executable program elements. According to an embodiment, the processor 120 may control (or process) an operation related to correcting the user input according to the sliding motion in a situation in which the user input and the sliding motion (e.g., slide-in/slide-out motion of flexible display 610) occur together in the electronic device 101. In an embodiment, the situation in which the user input and the sliding motion occur together may include, for example, a case in which a touch occurs during the slide-in/slide-out motion of the flexible display 610 or a case in which slide-in/out of the flexible display 610 occurs during a touch motion.

According to an embodiment, the processor 120 may perform an operation of displaying an execution screen of an application in a specified state of the display. According to an embodiment, the processor 120 may perform an operation of displaying an input area through the execution screen. According to an embodiment, the processor 120 may perform an operation of detecting a sliding event that a size of a display area of the display changes due to a sliding motion of the display while displaying the input area through the execution screen (e.g., while user input is being received based on input area). According to an embodiment, the processor 120 may perform an operation of correcting input coordinates related to a user input of the input area based on the size of the display area that changes according to a slide state, based on detection of the sliding event. According to an embodiment, the processor 120 may perform an operation of processing the user input based on the corrected input coordinates.

According to an embodiment, the operation of the electronic device 101 and/or the processor 120 of the electronic device 101 will be described with reference to the drawings described below.

According to an embodiment, the processor 120 may operate individually and/or collectively. According to an embodiment, the processor 120 may include an application processor and/or a communication processor. According to an embodiment, the communication processor may operate by being included in communication circuit.

According to an embodiment, the processor 120 may be an application processor (AP). According to an embodiment, the processor 120 may be a system semiconductor that is responsible for calculation and multimedia driving functions of the electronic device 101. According to an embodiment, the processor 120 may be configured in a system-on-chip (SoC) form and may include a technology-intensive semiconductor chip that integrates a plurality of semiconductor technologies into one and implements system blocks into a single chip.

Embodiments described herein may be implemented within recording media readable by a computer or a device similar thereto using software, hardware, or combination thereof. According to hardware implementation, operations described in in an embodiment may be implemented using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and/or electrical units for performing other functions.

According to an embodiment, operations performed by the processor 120 may be implemented by executing instructions stored in recording medium (or computer program product or storage medium). For example, the recording medium may include a non-transitory computer-readable recording medium for executing various operations (e.g., operations related to adaptively correcting user input (e.g., touch) for sliding motion (e.g., slide-out or slide-in motion) of display) performed by the processor 120.

In an embodiment, the electronic device 101 provides a computer-readable recording medium (or computer program product) storing a program to perform (or execute) various operations. The operations may include displaying an execution screen of an application in a specified state of the display, displaying an input area through the execution screen, detecting a sliding event that a size of display area of the display changes according to a sliding motion of the display while displaying the input area through the execution screen (e.g., while user input is being received based on input area), correcting input coordinates related to a user input of the input area based on the size of the display area that changes according to the slide state based on detection of the sliding event, and processing the user input based on the corrected input coordinates.

The electronic device 101 according to an embodiment of the disclosure may include a first housing (e.g., first housing 310 of FIG.3a to FIG. 3d), a second housing (e.g., second housing 320 of FIG.3a to FIG. 3d) provided to slidably move in a specified direction from the first housing, a display (e.g., flexible display 330 of FIG.3a to FIG. 3d) having a first display area (e.g., display area in closed state (or reduced state)) and a second display area (e.g., display area in open state (or extended state)) that extends from the first display area according to a state change according to a slide movement of the second housing, at least one processor (e.g., processor 120 of FIG. 1 or FIG. 6) including processing circuitry, and operatively connected to the display, and a memory (e.g., memory 130 of FIG. 1 or FIG. 6) operatively connected to the at least one processor. According to an embodiment, the memory 130 may store instructions that, when individually and/or collectively executed by the at least one processor 120, cause the electronic device 101 to perform operations.

According to an embodiment, the memory 130 may include an instruction that when executed by the at least one processor 120, causes the electronic device 101 to display an execution screen of an application in a specified state of the display. According to an embodiment, the memory 130 may include an instruction that when executed by the at least one processor 120, causes the electronic device 101 to display an input area through the execution screen. According to an embodiment, the memory 130 may include an instruction that when executed by the at least one processor 120, causes the electronic device 101 to detect a sliding event that a size of a display area of the display changes according to a sliding motion of the display while displaying the input area through the execution screen. According to an embodiment, the memory 130 may include an instruction that when executed by the at least one processor 120, causes the electronic device 101 to correct input coordinates related to a user input of the input area based on the size of the display area that changes according to a slide state, based on detection of the sliding event. According to an embodiment, the memory 130 may include an instruction that when executed by the at least one processor 120, causes the electronic device 101 to process the user input based on the corrected input coordinates.

According to an embodiment, the specified state may include a slide-in state of the display or a slide-out state of the display. According to an embodiment, the first display area may include an area that is visually exposed in the slide-in state. According to an embodiment, the second display area may include an area that extends from the first display area and is visually exposed in response to a change from the slide-in state to the slide-out state, which is a change in the size of the display area.

According to an embodiment, the memory 130 may include an instruction that when executed by the at least one processor 120, causes the electronic device 101 to correct the user input between a touch location at which an actual touch of a user is input and a release location at which the touch is released after the slide movement, in response to a change in the size of the display area according to the slide movement of the second housing.

According to an embodiment, the input area may include an area capable of receiving the user input.

According to an embodiment, the memory 130 may include an instruction that when executed by the at least one processor 120, causes the electronic device 101 to correct a touch value for the user input based on the input area according to the slide state of the display in a situation in which the user input and the sliding event occur together.

According to an embodiment, the memory 130 may include an instruction that when executed by the at least one processor 120, causes the electronic device 101 to determine the sliding motion that changes the size of the display area of the display while the user input is being received. According to an embodiment, the sliding event may include an event that the size of the display area of the display changes due to the sliding motion of the display.

According to an embodiment, the memory 130 may include an instruction that when executed by the at least one processor 120, causes the electronic device 101 to correct the input coordinates by applying an offset corresponding to the slide state of the display to the input coordinates according to the user input.

According to an embodiment, the memory 130 may include an instruction that when executed by the at least one processor 120, causes the electronic device 101 to correct the input coordinates by changing a touch screen panel (TSP) refresh rate.

According to an embodiment, the memory 130 may include an instruction that when executed by the at least one processor 120, causes the electronic device 101 to correct the input coordinates by mapping a sliding speed and a cycle of reading the input coordinates according to the user input when the sliding event occurs.

According to an embodiment, the memory 130 may include an instruction that when executed by the at least one processor 120, causes the electronic device 101 to control the display to display information corresponding to the user input on the input area based on the corrected input coordinates.

According to an embodiment, the memory 130 may include an instruction that when executed by the at least one processor 120, causes the electronic device 101 to determine whether the input area capable of receiving the user input is present on the execution screen of the running application based on detection of the sliding event. According to an embodiment, the memory 130 may include an instruction that when executed by the at least one processor 120, causes the electronic device 101 to determine whether the user input is present through the input area. According to an embodiment, the memory 130 may include an instruction that when executed by the at least one processor 120, causes the electronic device 101 to correct the input coordinates corresponding to the user input based on the slide state.

According to an embodiment, the memory 130 may include an instruction that when executed by the at least one processor 120, causes the electronic device 101 to suspend a correction process for the user input based on termination of the sliding event.

Hereinafter, an operating method of the electronic device 101 of various embodiments will be described in detail. Operations performed by the electronic device 101 according to various embodiments may be executed by the processor 120 that includes various processing circuitry and/or executable program elements of the electronic device 101. According to an embodiment, operations performed by the electronic device 101 may be stored as instructions in the memory 130 and may be individually and/or collectively performed by the processor 120.

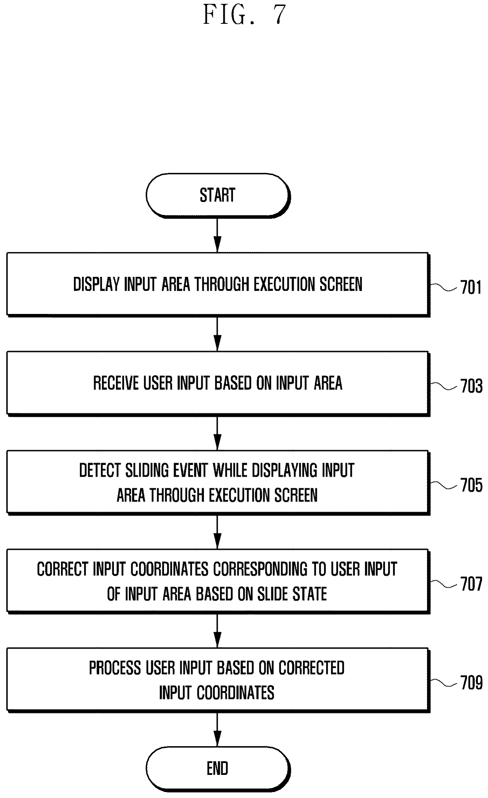

FIG. 7 is a flowchart illustrating an operating method of an electronic device according to an embodiment of the disclosure.

According to an embodiment, FIG. 7 may represent an example of an operation of the electronic device 101 (e.g., electronic device 200 and/or electronic device 300) according to an embodiment that adaptively processes (e.g., corrects) a user input (e.g., touch) in response to a sliding motion (e.g., slide-out or slide-in motion) of a display (e.g., flexible display 610).

According to an embodiment, the electronic device 101 may include a first housing (e.g., first housing 310 of FIG. 3a to FIG. 3d) and a second housing (e.g., second housing 320 of FIG. 3a to FIG. 3d) provided to slidably move relative to the first housing. According to an embodiment, the electronic device 101 may include a display (e.g., flexible display 330 of FIG. 3a to FIG. 3d) that supports a first display area (e.g., display area in slide-in state) and a second display area (e.g., display area in slide-out state) extending (or extending) from the first display area.

In the electronic device 101 according to an embodiment of the disclosure, a method of processing a user input according to a sliding motion of a display may be performed, for example, according to the flowchart illustrated in FIG. 7. The flowchart illustrated in FIG. 7 is an example according to an embodiment of the operation of the electronic device 101, and the order of at least some operations may be changed, performed in parallel, or performed as independent operations. Alternatively, at least some other operations may be performed complementarily to at least some operations. According to an embodiment of the disclosure, operation 701 to operation 709 may be performed by the at least one processor 120 of the electronic device 101.

As illustrated in FIG. 7, an operating method (e.g., operating method for processing user input in response to sliding motion) performed by the electronic device 101 according to an embodiment may include displaying an input area through an execution screen (701), receiving a user input based on the input area (703), detecting a sliding event while displaying the input area through the execution screen (705), correcting input coordinates corresponding to the user input of the input area based on a slide state (707), and processing the user input based on the corrected input coordinates (709).

With reference to FIG. 7, in operation 701, the processor 120 of the electronic device 101 may perform an operation of displaying the input area through the execution screen. According to an embodiment, the processor 120 may execute an application (e.g., browser application, message application, messenger application), and may display the input area through the execution screen of the application. In an embodiment, the input area may represent an area capable of receiving the user input (e.g., touch input, hovering touch input, or air gesture input). For example, the input area includes, but is not limited to, a keyboard (or keypad) (e.g., screen keyboard), a text input area of a messenger, a function icon, a URL input area of browser, and/or a user input box (e.g., search box) of webpage.

According to an embodiment, the input area may receive the user input (e.g., touch input, hovering touch input, or air gesture input) on the execution screen of the running application, and the application may transmit a variety of information (e.g., touch information, coordinate information, text information) on the user input received through the input area to the processor 120. According to an embodiment, the input area may be provided on demand. For example, the input area may be activated and wait for receiving the user input, upon request from the user, for example, based on a keyboard (or keypad) call command and/or a user selection (e.g., touch) on the input area (e.g., URL input area, search box) included in the application upon application execution.

In operation 703, the processor 120 may perform an operation of receiving the user input based on the input area. According to an embodiment, the user may perform a specified user input (e.g., input for inputting text, input for selecting function icon, or input for inputting copy & paste) through the input area. According to an embodiment, the processor 120 may detect the user input from the displayed input area.

In operation 705, the processor 120 may perform an operation of detecting the sliding event while displaying the input area through the execution screen. According to an embodiment, the processor 120 may determine the sliding motion (e.g., slide-in motion or slide-out motion) that changes the size of the display area of the display while displaying the input area through the execution screen. According to an embodiment, the processor 120 may determine whether the sliding motion of the display starts, and when start of the sliding motion is detected, may determine it as a trigger related to the sliding event.

According to an embodiment, the sliding event may include an event that the size of the display area of the display (e.g., physical size of display) changes due to the sliding motion of the display, and may include, for example, all of up/down and/or left/right directivity and extension/reduction changeability, depending on a form factor of the electronic device 101. According to an embodiment, the processor 120 may determine start and end of the sliding event based on sensor data of a specified sensor (e.g., hall sensor). According to an embodiment, the processor 120 may determine a start time and an end time for updating a touch location based on start and end of the sliding event. According to an embodiment, the processor 120 may periodically check a sensor value related to the sliding motion and may use the same to correct a location value of a current input area during the sliding motion of the display. According to an embodiment, a start point in time of the sliding event may be recognized through a specified sensor, and a termination point in time of the sliding event may be inferred and applied based on a sliding speed.

In operation 707, the processor 120 may perform an operation of correcting the input coordinates corresponding to the user input of the input area based on the slide state. According to an embodiment, a display location of the input area may be changed due to the sliding motion of the display. According to an embodiment, depending on the sliding motion (e.g., sliding event) of the display, a situation may arise in which an input location (or location touched by user) (e.g., location intended by user) of the input area and a user screen location (or location at which touch is released) (e.g., location at which touch is released after slide movement) do not match. According to an embodiment, when the above situation occurs, the processor 120 may correct touch coordinates (e.g., correct touch value) according to the user input based on the slide state. According to an embodiment, the processor 120 may correct the touch coordinates by applying an offset corresponding to the slide state to the touch coordinates according to the user input, and may process the user input based on the corrected touch coordinates. According to an embodiment, the processor 120 may operate to correct touch values physically input according to a current slide state to match the same situation in a final stage. According to an embodiment, correcting the user input is described with reference to drawings described below.

In operation 709, the processor 120 may perform an operation of processing the user input based on the corrected input coordinates. According to an embodiment, the processor 120 may control the display module 160 to display information corresponding to the user input on the input area based on the corrected input coordinates. For example, the processor 120 may correct the location value of the input area, may update the same on the execution screen, and may provide the updated location value to the user. According to an embodiment, an operation of processing the user input is described with reference to drawings described below.

According to an embodiment, FIG. 7 illustrates an example in which the sliding motion starts sequentially or in parallel with the user input, but the disclosure is not limited thereto. It is described in FIG. 7 that the sliding event is detected while the user input is being received, but the disclosure is not limited thereto. For example, according to the disclosure, the slide movement may occur first and the user input may occur during the slide movement. In an embodiment, a situation in which the user input and the sliding motion occur together may include, for example, all of a case in which touch occurs during the slide-in/slide-out motion of the flexible display 610 and a case in which slide-in/out of the flexible display 610 occurs during a touch motion. For example, the disclosure may include adaptively processing the user input according to the slide movement in a situation in which the user input and the sliding motion occur together.

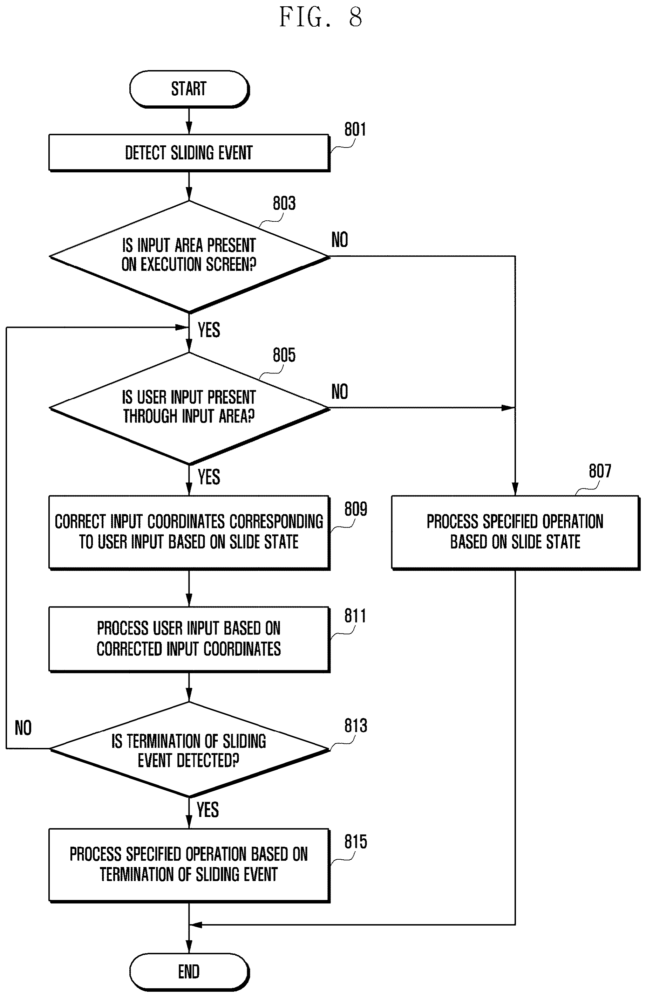

FIG. 8 is a flowchart illustrating an operating method of an electronic device according to an embodiment of the disclosure.

According to an embodiment, FIG. 8 may represent an example of an operation of the electronic device 101 (e.g., electronic device 200 and/or electronic device 300) according to an embodiment that adaptively processes (e.g., corrects) a user input (e.g., touch input, hovering touch input, or air gesture input) in response to a sliding motion (e.g., slide-out or slide-in motion) of a display (e.g., flexible display 610).

According to an embodiment, the electronic device 101 may include a first housing (e.g., first housing 310 of FIG. 3a to FIG. 3d) and a second housing (e.g., second housing 320 of FIG. 3a to FIG. 3d) provided to slidably move relative to the first housing. According to an embodiment, the electronic device 101 may include a display (e.g., flexible display 330 of FIG. 3a to FIG. 3d) that supports a first display area (e.g., display area in slide-in state) and a second display area (e.g., display area in slide-out state) extending (or extending) from the first display area.

In the electronic device 101 according to an embodiment of the disclosure, a method of processing a user input according to a sliding motion of a display may be performed, for example, according to the flowchart illustrated in FIG. 8. The flowchart illustrated in FIG. 8 is an example according to an embodiment of the operation of the electronic device 101, and the order of at least some operations may be changed, performed in parallel, or performed as independent operations. Alternatively, at least some other operations may be performed complementarily to at least some operations. According to an embodiment of the disclosure, operation 801 to operation 815 may be performed by the at least one processor 120 of the electronic device 101.

According to an embodiment, operations described in FIG. 8 may be performed heuristically, for example, in combination with the operations described in FIG. 7, or may be performed heuristically as a detailed operation of at least some of the above-described operations.

As illustrated in FIG. 8, an operating method (e.g., operating method for processing user input in response to sliding motion) performed by the electronic device 101 according to an embodiment may include detecting a sliding event (801), determining whether an input area is present on an execution screen (803), if the input area is absent, processing a specified operation based on a slide state (807), if the input area is present, determining whether a user input is present through the input area (805), if the user input is absent, processing the specified operation based on the slide state (807), if the user input is present, correcting input coordinates corresponding to the user input based on the slide state (809), processing the user input based on the corrected input coordinates (811), determining whether termination of the sliding event is detected (813), if termination of the sliding event is not detected, performing the processing of the user input by proceeding with operation 805, and if termination of the sliding event is detected, processing the specified operation based on termination of the sliding event (815).

With reference to FIG. 8, in operation 801, the processor 120 of the electronic device 101 may perform an operation of detecting the sliding event. According to an embodiment, the sliding event may include an event that the size of the display area of the display (e.g., physical size of display) changes due to the sliding motion of the display, and may include, for example, all of up/down and/or left/right directivity and extension/reduction changeability, depending on a form factor of the electronic device 101. According to an embodiment, the processor 120 may determine start and end of the sliding event based on sensor data of a specified sensor (e.g., hall sensor). According to an embodiment, a start point in time of the sliding event may be recognized through a specified sensor, and a termination point in time of the sliding event may be inferred and applied based on a sliding speed.

In operation 803, the processor 120 may perform an operation of determining whether the input area is present on the execution screen. According to an embodiment, the processor 120 may determine whether the input area capable of receiving the user input is present on the execution screen of the running application based on detection of the sliding event. In an embodiment, the input area may represent an area capable of receiving the user input (e.g., touch input, hovering touch input, or air gesture input). For example, the input area includes, but is not limited to, a keyboard (or keypad) (e.g., screen keyboard), a text input area of a messenger, a function icon, a URL input area of browser, and/or a user input box of webpage.

If the input area is absent in operation 803 (e.g., 'No' in operation 803), the processor 120 may perform an operation of processing the specified operation based on the slide state in operation 807. According to an embodiment, the processor 120 may control the display module 160 to display the execution screen of the application through at least one display area in response to the change in the size of the display area that changes according to the sliding motion. According to an embodiment, the processor 120 may handle an operation of displaying the execution screen of the application by zooming in response to the change in the size of the display area, or moving and displaying content within the execution screen.

If the input area is present in operation 803 (e.g., 'Yes' in operation 803), the processor 120 may perform an operation of determining whether the user input is present through the input area in operation 805. According to an embodiment, the user may perform the user input (e.g., input for inputting text, input for selecting function icon, or input for inputting copy & paste) through the input area. According to an embodiment, the processor 120 may detect the user input from the displayed input area.

If the user input is absent in operation 805 (e.g., 'No' in operation 805), the processor 120 may perform an operation of processing the specified operation based on the slide state in operation 807. According to an embodiment, the processor 120 may control the display module 160 to display the execution screen of the application through the at least one display area in response to the change in the size of the display area that changes according to the sliding motion.

If the user input is present in operation 805 (e.g., 'Yes' in operation 805), the processor 120 may perform an operation of correcting the input coordinates corresponding to the user input based on the slide state in operation 809. According to an embodiment, depending on the sliding motion (e.g., sliding event) of the display, a situation may arise in which an input location (or location touched by user) (e.g., location intended by user) of the input area and a user screen location (or location at which touch is released) (e.g., location at which touch is released after slide movement) do not match. According to an embodiment, when the above situation occurs, the processor 120 may correct touch coordinates (e.g., correct touch value) according to the user input based on the slide state. According to an embodiment, the processor 120 may correct the touch coordinates by applying an offset corresponding to the slide state to the touch coordinates according to the user input, and may process the user input based on the corrected touch coordinates. According to an embodiment, the processor 120 may operate to correct touch values physically input according to a current slide state to match the same situation in a final stage. According to an embodiment, input touch values may be acquired by the user input, for example, a touch input based on the input area, a hovering touch input, or an air gesture input. According to an embodiment, correcting the user input is described with reference to drawings described below.

In operation 811, the processor 120 may perform an operation of processing the user input based on the corrected input coordinates. According to an embodiment, the processor 120 may control the display module 160 to display information corresponding to the user input on the input area based on the corrected input coordinates. For example, the processor 120 may correct the location value of the input area, may update the same on the execution screen, and may provide the updated location value to the user. According to an embodiment, an operation of processing the user input is described with reference to drawings described below.

In operation 813, the processor 120 may perform an operation of determining whether termination of the sliding event is detected. According to an embodiment, the processor 120 may suspend a correction process for the user input based on termination of the sliding event. According to an embodiment, the processor 120 may determine start and end of the sliding event based on sensor data of a specified sensor (e.g., hall sensor). According to an embodiment, the processor 120 may periodically check a sensor value related to the sliding motion and may determine whether the sliding event is terminated. According to an embodiment, the processor 120 may recognize a start point in time of the sliding event through a specified sensor and may infer a termination point in time of the sliding event based on a sliding speed.

If termination of the sliding event is not detected in operation 813 (e.g., 'No' in operation 813), the processor 120 may proceed with operation 805 and may perform operations followed by the operation 805. For example, the processor 120 may perform an operation of performing the processing on=f the user input.

If termination of the sliding event is detected in operation 813 (e.g., 'Yes' in operation 813), the processor 120 may perform an operation of processing the specified operation based on termination of the sliding event in operation 815. According to an embodiment, the processor 120 may update the execution screen with information on the user input (e.g., text input by user) based on the input area, based on a current slide state, and may provide the same to the user.

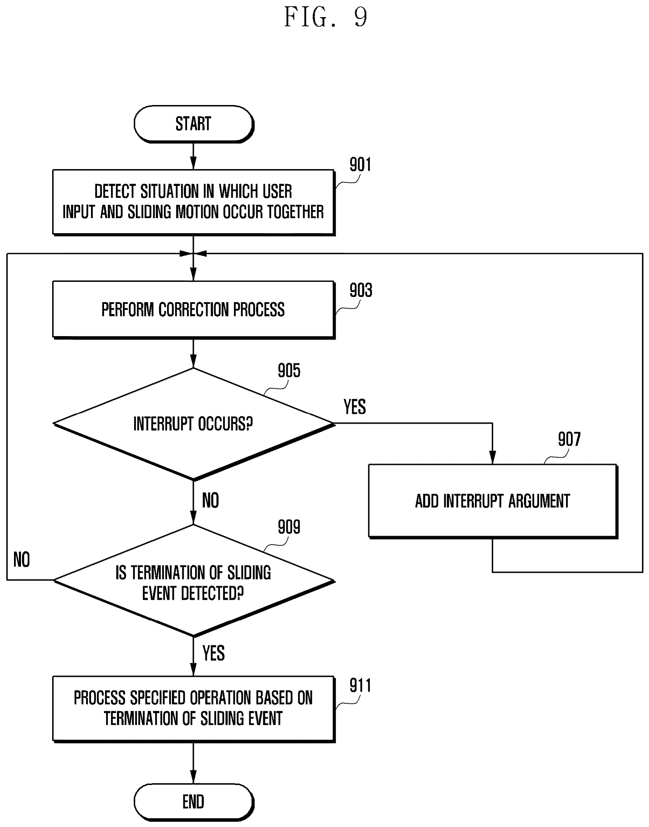

FIG. 9 is a flowchart illustrating an operating method of an electronic device according to an embodiment of the disclosure.

According to an embodiment, FIG. 9 may represent an example of an operation of the electronic device 101 (e.g., electronic device 200 and/or electronic device 300) according to an embodiment that adaptively processes (e.g., corrects) a user input (e.g., touch input, hovering touch input, or air gesture input) in response to a sliding motion (e.g., slide-out or slide-in motion) of a display (e.g., flexible display 610).

According to an embodiment, the electronic device 101 may include a first housing (e.g., first housing 310 of FIG. 3a to FIG. 3d) and a second housing (e.g., second housing 320 of FIG. 3a to FIG. 3d) provided to slidably move relative to the first housing. According to an embodiment, the electronic device 101 may include a display (e.g., flexible display 330 of FIG. 3a to FIG. 3d) that supports a first display area (e.g., display area in slide-in state) and a second display area (e.g., display area in slide-out state) extending (or extending) from the first display area.

In the electronic device 101 according to an embodiment of the disclosure, a method of processing a user input according to a sliding motion of a display may be performed, for example, according to the flowchart illustrated in FIG. 9. The flowchart illustrated in FIG. 9 is an example according to an embodiment of the operation of the electronic device 101, and the order of at least some operations may be changed, performed in parallel, or performed as independent operations. Alternatively, at least some other operations may be performed complementarily to at least some operations. According to an embodiment of the disclosure, operation 901 to operation 911 may be performed by the at least one processor 120 of the electronic device 101.

According to an embodiment, operations described in FIG. 9 may be performed heuristically, for example in combination with the operations described in FIG. 7 and FIG. 8, or may be performed heuristically as a detailed operation of at least some of the above-described operations.

As illustrated in FIG. 9, an operating method (e.g., operating method for processing user input in response to sliding motion) performed by the electronic device 101 according to an embodiment may include detecting a situation in which a user input and a sliding motion occur together (901), performing a correction process (903), determining whether an interrupt occurs (905), if the interrupt occurs, adding an interrupt argument (907), if the interrupt does not occur, determining whether termination of a sliding event is detected (909), if termination of the sliding event is not detected, proceeding with operation 903 and performing the processing of the user input, and if termination of the sliding event is detected, processing a specified operation based on termination of the sliding event (911).

With reference to FIG. 9, in operation 901, the processor 120 of the electronic device 101 may perform an operation of detecting a situation in which the user input and the sliding motion occur together. According to an embodiment, the situation in which the user input and the sliding motion occur together may include a situation in which an input area to which touch of the user is input may be affected by the sliding event. For example, the situation may include a situation in which an input location (or location touched by user) (e.g., location intended by user) of a keyboard changes due to the sliding motion of the display while the user performs a touch input using the keyboard.

According to an embodiment, when the sliding event occurs in a situation in which the input area is displayed on the execution screen and an input area-based user input (e.g., touch input, hovering touch input, or air gesture input) is possible, the processor 120 may operate to correct a touch value for the input area according to the slide state of the display. For example, when the user input occurs during the sliding motion that changes the size of the display area of the display, the processor 120 may operate to process the user input based on a correction value, to update the same on the execution screen, and to provide the same to the user.

In operation 903, the processor 120 may perform an operation of performing the correction process. According to an embodiment, the processor 120 may perform the correction process according to a current slide state of the display. For example, the processor 120 may correct and provide touch values input during the sliding motion of the display to correspond to the current slide state of the display.

According to an embodiment, the processor 120 may remap the input area (e.g., keyboard) and the execution screen of the application. According to an embodiment, arguments for remapping the input area and the execution screen may include location coordinates of the input area (e.g., keyboard), a current input location through input coordinates according to the user input (e.g., touch input, hovering touch input, or air gesture input), the size of the input area (e.g., keyboard) itself, and/or a touch screen panel (TSP) refresh rate.

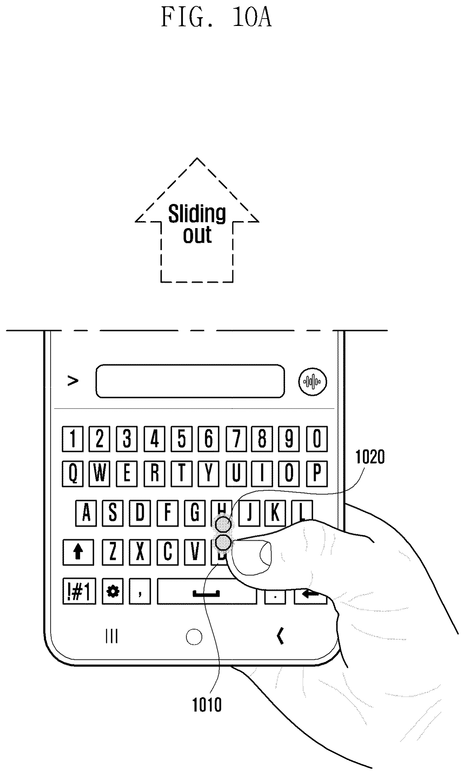

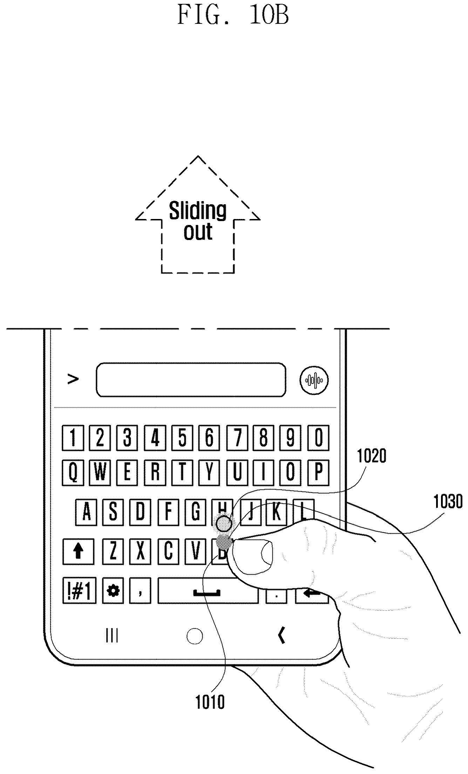

According to an embodiment, the processor 120 may process the correction process to fix a size and a location of the input area and to fix a current input location (e.g., touched location) of the user. For example, an absolute location of the display may change, but a relative location at which the user views the display may be maintained as is. The corresponding examples are illustrated in FIG. 10a and FIG. 10b.

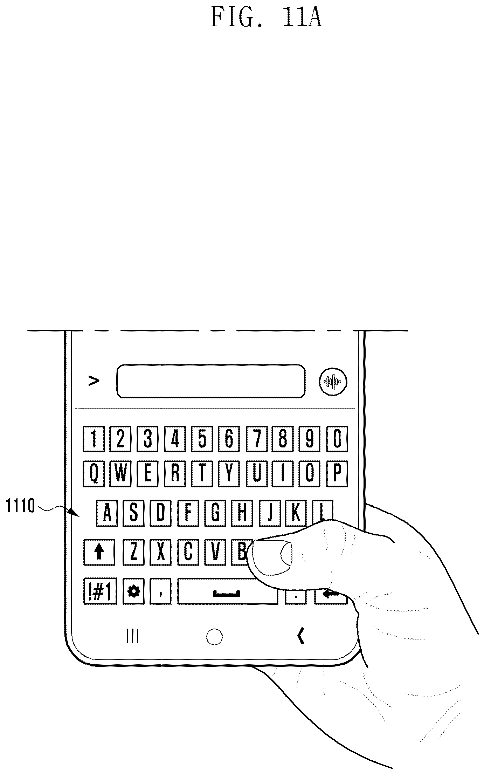

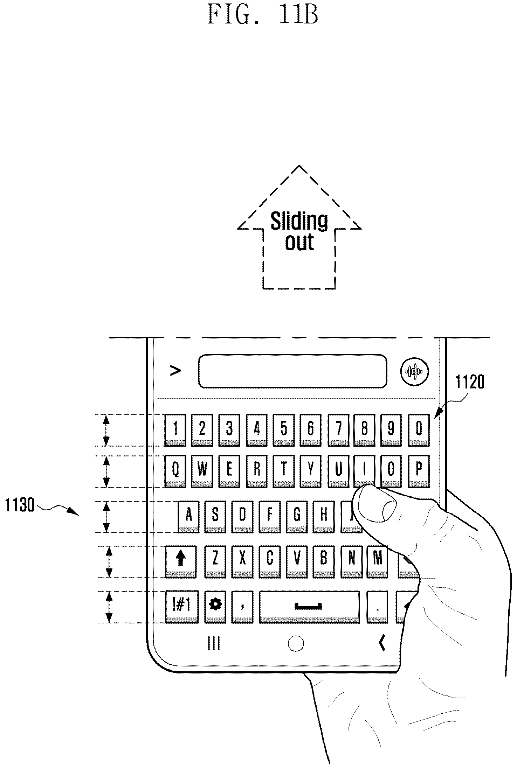

According to an embodiment, the processor 120 may process the correction process to fix the size of the input area and to change the location of the input area. For example, the size of the input area may be fixed, but a start point of the user input may change according to the sliding event. For example, an absolute location of the display may move up/down and/or left/right according to the sliding event, but actual touch coordinates may maintain existing values. The corresponding examples are illustrated in FIG. 11a and FIG. 11b.

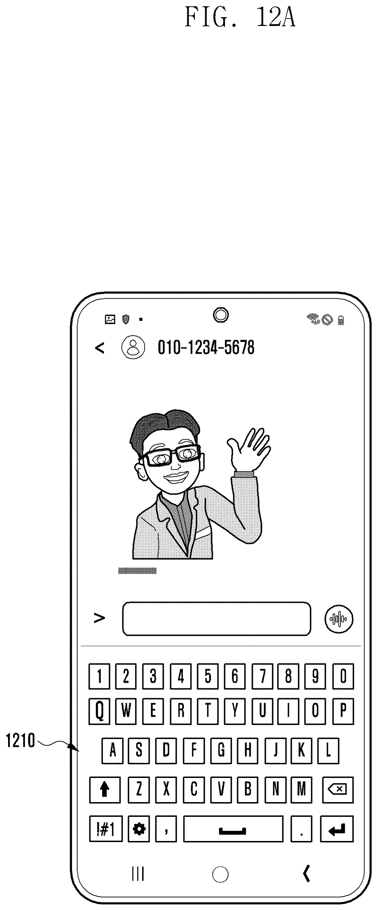

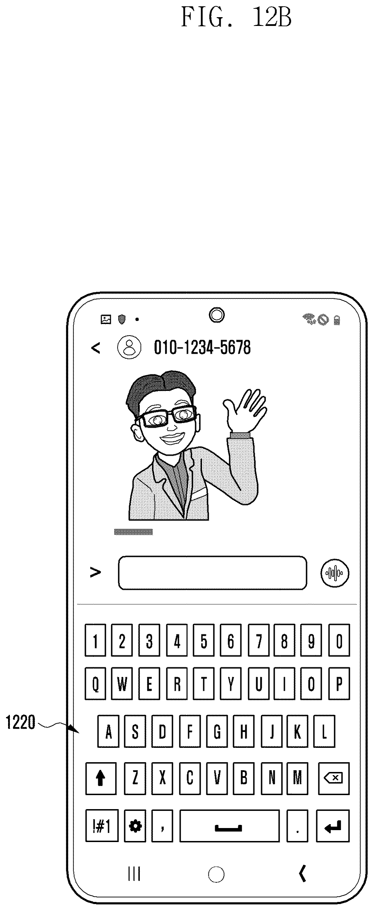

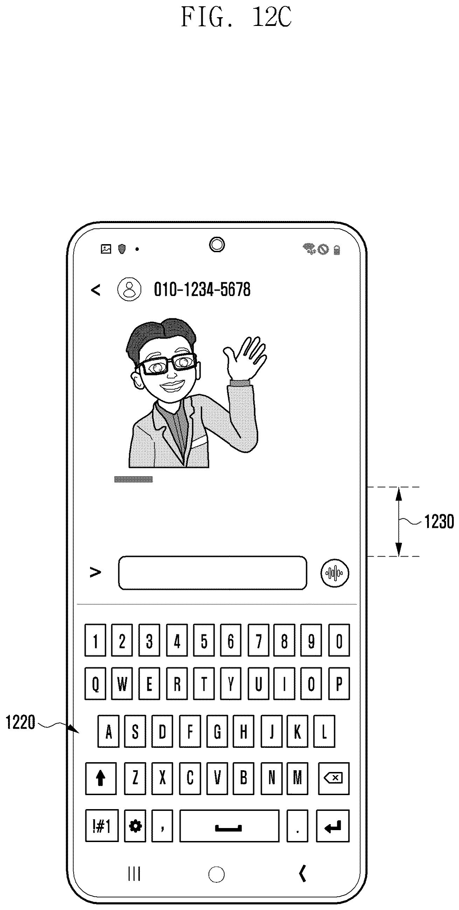

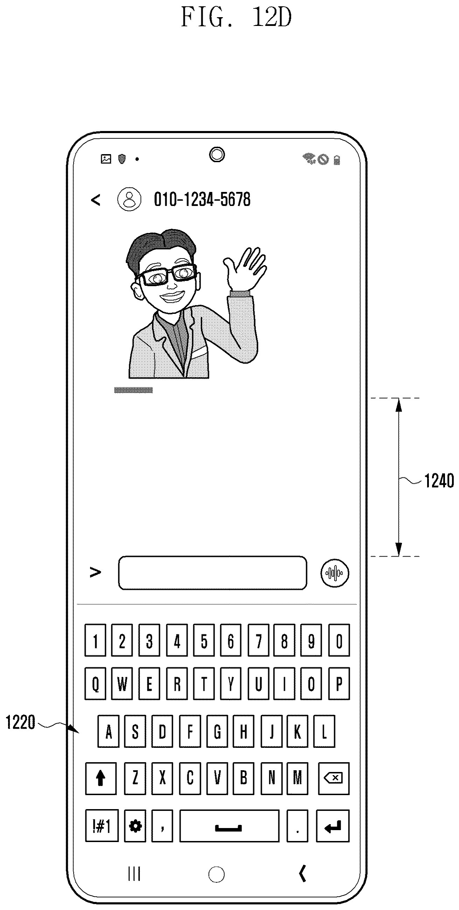

According to an embodiment, the processor 120 may process the correction process to fix the current input location (e.g., touched location) of the user and to increase or decrease only the size of the execution screen in real time. For example, the processor 120 may also correct location coordinates of the input area. For example, when the size of the input area changes, the absolute location of the display may also change but a relative location at which the user views may be maintained at the location of the input area. The corresponding examples are illustrated in FIG. 12a, FIG. 12b, FIG. 12c, and FIG. 12d.

According to an embodiment, the processor 120 may instantaneously increase a TSP refresh rate when correcting the user input, thereby making it possible to respond correspondingly to a reaction speed. For example, the processor 120 may change the TSP refresh rate through register access of TSP.

According to an embodiment, the processor 120 may process correction for the user input based on at least one of various correction combinations. According to an embodiment, it may be assumed that a sliding length according to the sliding motion of the display is about 55 mm, the sliding speed according to the sliding motion is about 55 mm/s, a minimum size of the screen according to the slide-in state is about 1000*3000, a maximum size of the screen according to the slide-out state is about 1000*3825, and the TSP refresh rate at which the display (e.g., touch detection circuit 620 or a touch IC) transmits touch coordinates is about 120 Hz. In an embodiment, when the TSP refresh rate is about 12 Hz, a frame may be updated, for example, approximately every 8 ms to 9 ms (e.g., about 8.3 ms).

According to an embodiment, the electronic device 101 may have about N different coordinates depending on the vertical length of the display area for each form factor. For example, when the vertical length of the display area is about 200 mm, the electronic device 101 may have about 3000 coordinates. In this case, the electronic device 101 may have 15 coordinates for about each 1 mm. For example, the length of the display area may increase by about 55 mm for 1 second during which the sliding motion according to the sliding event proceeds, and about 825 (e.g., 55 mm * 15) touch coordinates may be generated during about 120 frames. These examples may be summarized as shown in <Table 1> below.

**[Table 1]**

| Frame : Time | Coordinates |
|---|---|
| 000 : 008.3ms | x : 1000 y : 3000 |
| 001 : 016.6ms | x : 1000 y : 3007 |
| 002 : 024.9ms | x : 1000 y : 3014 |
| 003 : 033.2ms | x : 1000 y : 3021 |
| ... | ... |
| 118 : 583.4ms | x : 1000 y : 3811 |
| 119 : 591.7ms | x : 1000 y : 3818 |
| 120 : 600.0ms | x : 1000 y : 3825 |

As exemplified in <Table 1>, for example, a frame may be updated approximately every 8.3 ms, and about seven coordinate values may be added to the corresponding coordinate values. The corresponding examples are illustrated in FIG. 10a and FIG. 10b.

In operation 905, the processor 120 may perform an operation of determining whether the interrupt occurs. According to an embodiment, the interrupt may include a situation in which the sliding motion according to the sliding event is not completed and the sliding motion is suspended or canceled.

When the interrupt occurs in operation 905 (e.g., 'Yes' in operation 905), the processor 120 may perform an operation of adding the interrupt argument in operation 907. According to an embodiment, when the sliding motion of the display is suspended or canceled due to the interrupt, the processor 120 may perform recalibration for the user input, including the corresponding interrupt argument. According to an embodiment, if the interrupt is detected (e.g., suspension of sliding is detected), the processor 120 may determine a type of the interrupt (e.g., forceful suspension by user, law battery, and/or call occurrence), and may determine an interrupt argument according to the type of interrupt. The interrupt argument may include, for example, an argument value for a situation in which the sliding motion is not completed and is being obstructed.

When the interrupt does not occur in operation 905 (e.g., 'No' in operation 905), the processor 120 may perform an operation of determining whether termination of the sliding event is detected in operation 909.

If termination of the sliding event is not detected in operation 909 (e.g., 'No' in operation 909'), the processor 120 may proceed to operation 903 and may perform operations followed by operation 903. For example, the processor 120 may perform the processing of the user input.

If termination of the sliding event is detected in operation 909 (e.g., 'Yes' in operation 909'), the processor 120 may perform an operation of processing the specified operation based on termination of the sliding event in operation 911.

FIGS. 10a and 10b illustrate examples of an operation for processing a user input in an electronic device according to an embodiment of the disclosure.

According to an embodiment, FIG. 10a and FIG. 10b may represent examples of an operation of correcting a user input location (e.g., touched location) according to a sliding motion in an input area.

According to an embodiment, FIG. 10a and FIG. 10b may represent examples of processing correction for the user input in a state in which a size and a location of an input area are fixed and a current input location of the user is maintained as is. For example, examples in which an absolute location of the display may vary, but a relative location at which the user views is maintained may be represented.

According to an embodiment, FIG. 10a and FIG. 10b may represent comparative examples for a touch input 1010 at which an actual touch of the user is input on the input area (e.g., keyboard) of the electronic device 101 and a release location 1020, 1030 at which the touch is released according to a slide movement. For example, FIG. 10a may represent an example of an operation in a case in which there is no correction of touch coordinates according to the slide movement, and FIG. 10b may represent an example of an operation of correcting and providing touch coordinates according to the slide movement.

According to an embodiment, if the sliding event occurs when the user's touch input 1010 is located at about 1000,3000 coordinates, the location may be at about 1000,3000 coordinates even when the touch is released. However, as in the example of FIG. 10a, a location actually viewed by the user based on the sliding speed according to the sliding event may be, for example, the location 1020 that has moved upward by, for example, about 5.5 cm per second. For example, the touch input location and the touch release location may be different. On the other hand, according to the disclosure, by correcting the touch release location to correspond to the touch input location based on the sliding speed, not about 1000,3000 coordinates but about 1000,3007 coordinates may be provided as a release point such that the user's touch input location and touch release location appear to be the same.

According to an embodiment, update may be required within a specified interval between the touch input and the touch release. In an embodiment, correction may be performed by updating every Nms corresponding to an interval for each form factor of the electronic device 101. For example, when the specified interval between the touch input and the touch release is about 70 ms in the specific form factor of the electronic device 101, the frame may be updated and corrected approximately every 8.3 ms. For example, a correction value of about 7 may be applied for touch release after about 8.3 ms according to a first frame, a correction value of about 14 may be applied for touch release after about 16.6 ms according to a second frame, ..., a correction value of about 70 may be applied for touch release after about 83 ms according to an N-th frame.

For example, as exemplified in FIG. 10a, 1000,3000 of the coordinates 1010 according to the touch input may be changed to 1000,3070 of the coordinates 1020 according to the touch release after about 83 ms. Therefore, as exemplified in FIG. 10b, by applying a touch coordinate correction value of about 70 to 1000,3070 of the touch release coordinates 1020, the coordinates 1030 according to the touch release may be maintained at 1000,3000 of the coordinates 1010 according to the touch input.

According to an embodiment, the processor 120 may further consider a UI response speed for real-time correction. For example, when the sliding event occurs, the processor 120 may map a sliding speed and a cycle for reading input coordinates according to the user input and may correct the input coordinates in real time using the value. For example, an update time considering a TSP refresh rate of a touch IC and a firmware UI response speed (e.g., about 180 ms) may be considered together. For example, an amount of time required for a final response to be actually viewed to the user's eyes after the touch input may need to be processed within, for example, about 180 ms. Here, a firmware UI update time may be about 50 ms, and a touch IC update time and a firmware UI update time may be processed within about 180 ms, so real-time correction may be supported.

According to an embodiment, the electronic device 101 may experience a situation, such as degradation in performance (e.g., processing speed) depending on the use of the electronic device 101. In an embodiment of the disclosure, when the degradation occurs in the performance of the electronic device 101, the above-described TSP refresh rate (e.g., touch IC transfer time) may be adjusted to support fast processing for a faster correction process.

According to an embodiment, when the sliding motion is suspended according to occurrence of an interrupt, the electronic device 101 may suspend the correction process for the user input. According to an embodiment, if a second sliding motion (e.g., slide-in motion) in the opposite direction to a first sliding motion occurs during the first sliding motion (e.g., slide-out motion), the electronic device 101 may support the real-time correction by reversing the existing processing process and may prevent the usability of the user from decreasing.

FIGS. 11a and 11b illustrate examples of an operation for processing a user input in an electronic device according to an embodiment of the disclosure.

According to an embodiment, FIG. 11a and FIG. 11b may represent an example in which the electronic device 101 provides a notification for processing a user input according to a sliding motion of a display through an input area (e.g., keyboard).

According to an embodiment, FIG. 11a may represent an example for an input area 1110 (e.g., keyboard) and a touch input on the input area 1110 in a slide-in state of the display. According to an embodiment, FIG. 11b may represent an example of changing the input area 1110 to an input area 1120 for a notification for correction according to the touch input, in response to a slide-out motion of the display.

As illustrated in FIG. 11a and FIG. 11b, the electronic device 101 may support a user notification according to correction processing of the user input. According to an embodiment, the electronic device 101 may detect the slide-out motion during the user input through the first input area 1110 in the slide-in state of the display.

According to an embodiment, in the case of detecting the slide-out motion, the electronic device 101 may change a button (or key) having a first size of the first input area 1110 to a button (or key) having a second size 1130 in the direction opposite to the slide-out direction and may provide the same as the second input area 1120. For example, the electronic device 101 may change the input area to correspond to the change in the size of the display area according to the slide-out motion, and may provide the user with the notification for correction processing of the user input.

FIGS. 12a, 12b, 12c, and 12d illustrate examples of an operation for processing a user input in an electronic device according to an embodiment of the disclosure.

According to an embodiment, FIG. 12a may represent an example of providing a first input area 1210 of a first size and an execution screen in a slide-in state of a display. According to an embodiment, FIG. 12b may represent an example of providing a second input area 1220 of a second size and the execution screen in the slide-in state of the display. According to an embodiment, FIG. 12c and FIG. 12d may represent an example of the second input area 1220 and the execution screen that are provided in response to a change in a size of the display area according to a slide-out motion of the display.

As illustrated in FIG. 12a, the electronic device 101 may detect the slide-out motion during the user input through the first input area 1210 in the slide-in state of the display. According to an embodiment, in the case of detecting the slide-out motion, the electronic device 101 may change a button (or key) having the first size of the first input area 1210 to the button (or key) having the second size in the direction opposite to the slide-out state and may provide the same as the second input area 1220 as exemplified in FIG. 12b.

As illustrated in FIG. 12c and FIG. 12d, the electronic device 101 may provide an execution screen of an application by maintaining (or fixing) the second input area 1220 and by changing (e.g., increasing) the size in response to the change in the size of the display area according to the slide-out motion. For example, the electronic device 101 may change and provide the execution screen in real time in response to a change in a size 1230, 1240 of the display area according to slide-out. For example, the electronic device 101 may change the size of the execution screen that displays content during the slide-out motion in a state in which the first input area 1210 is changed to the second input area 1220. According to an embodiment, the electronic device 101 may correct and provide the user input based on the second input area 1210.

The electronic device 101 according to an embodiment of the disclosure may include a display including a first display area and a second display area that extends from the first display area. An operating method performed by the electronic device 101 may include displaying an execution screen of an application in a specified state of the display. The operating method according to an embodiment may include displaying an input area through the execution screen. The operating method according to an embodiment may include detecting a sliding event that a size of a display area of the display changes according to a sliding motion of the display while displaying the input area through the execution screen. The operating method according to an embodiment may include correcting input coordinates related to a user input of the input area based on the size of the display area that changes according to a slide state based on detection of the sliding event. The operating method according to an embodiment may include processing the user input based on the corrected input coordinates.

According to an embodiment, the specified state may include a slide-in state of the display or a slide-out state of the display. According to an embodiment, the first display area may include an area that is visually exposed in the slide-in state. According to an embodiment, the second display area may include an area that extends from the first display area and is visually exposed in response to a change from the slide-in state to the slide-out state, which is a change in the size of the display area.

According to an embodiment, the correcting may correct a touch value for the input area according to the slide state of the display in a situation in which the user input and the sliding event occur together.

According to an embodiment, the operating method may include determining a sliding motion that changes the size of the display area of the display while the user input is being received. According to an embodiment, the sliding event may include an event that the size of the display area of the display changes due to the sliding motion of the display.

According to an embodiment, the correcting may include correcting the input coordinates by applying an offset corresponding to the slide state of the display to the input coordinates according to the user input.

According to an embodiment, the correcting may include correcting the input coordinates by changing a touch screen panel (TSP) refresh rate.

According to an embodiment, the correcting may include correcting the input coordinates by mapping a sliding speed and a cycle of reading the input coordinates according to the user input when the sliding event occurs.

According to an embodiment, the operating method may include determining whether the input area capable of receiving the user input is present on the execution screen of the running application based on detection of the sliding event. According to an embodiment, the operating method may include determining whether the user input is present through the input area. According to an embodiment, the operating method may include correcting the input coordinates corresponding to the user input based on the slide state.

Various embodiments of the disclosure disclosed in the present specification and drawings are provided as specific examples to easily explain the technical content of the disclosure and to help understanding of the disclosure, and are not intended to limit the scope of the disclosure. Therefore, the scope of the disclosure should be interpreted to include all changes or modifications derived based on the technical spirit of the disclosure in addition to the embodiments disclosed herein.

## Claims

1. An electronic device comprising:
a first housing;
a second housing provided to slidably move in a specified direction from the first housing;
a display having a first display area and a second display area that extends from the first display area according to a state change according to a slide movement of the second housing;
at least one processor including processing circuitry, and operatively connected to the display; and
a memory operatively connected to the at least one processor,
wherein the memory stores instructions that when executed by the at least one processor, cause the electronic device to,
display an execution screen of an application in a specified state of the display,
display an input area through the execution screen,
detect a sliding event that a size of a display area of the display changes due to a sliding motion of the display while displaying the input area through the execution screen,
correct input coordinates related to a user input of the input area based on the size of the display area that changes according to a slide state, based on detection of the sliding event, and
process the user input based on the corrected input coordinates.

2. The electronic device of claim 1, wherein:
the specified state includes a slide-in state of the display or a slide-out state of the display,
the first display area includes an area that is visually exposed in the slide-in state,
the second display area includes an area that extends from the first display area and is visually exposed in response to a change from the slide-in state to the slide-out state, which is a change in the size of the display area, and
the input area includes an area capable of receiving the user input.

3. The electronic device of claim 1, wherein the instructions, when executed by the at least one processor, cause the electronic device to correct the user input between a touch location at which an actual touch of a user is input and a release location at which the touch is released after the slide movement, in response to a change in the size of the display area according to the slide movement of the second housing.

4. The electronic device of claim 1, wherein the instructions, when executed by the at least one processor, cause the electronic device to correct a touch value for the user input based on the input area according to the slide state of the display in a situation in which the user input and the sliding event occur together.

5. The electronic device of claim 4, wherein the instructions, when executed by the at least one processor, cause the electronic device to determine the sliding motion that changes the size of the display area of the display while the user input is being received.

6. The electronic device of claim 4, wherein the instructions, when executed by the at least one processor, cause the electronic device to correct the input coordinates by applying an offset corresponding to the slide state of the display to the input coordinates according to the user input.

7. The electronic device of claim 6, wherein the instructions, when executed by the at least one processor, cause the electronic device to correct the input coordinates by changing a touch screen panel (TSP) refresh rate.

8. The electronic device of claim 6, wherein the instructions, when executed by the at least one processor, cause the electronic device to correct the input coordinates by mapping a sliding speed and a cycle of reading the input coordinates according to the user input when the sliding event occurs.

9. The electronic device of claim 1, wherein the instructions, when executed by the at least one processor, cause the electronic device to control the display to display information corresponding to the user input on the input area based on the corrected input coordinates.

10. The electronic device of claim 1, wherein the instructions, when executed by the at least one processor, cause the electronic device to,
determine whether the input area capable of receiving the user input is present on the execution screen of the running application based on detection of the sliding event,
determine whether the user input is present through the input area, and
correct the input coordinates corresponding to the user input based on the slide state.

11. The electronic device of claim 1, wherein the instructions, when executed by the at least one processor, cause the electronic device to suspend a correction process for the user input based on termination of the sliding event.

12. An operating method of an electronic device comprising a display having a first display area and a second display area that extends from the first display area, the method comprising:
displaying an execution screen of an application in a specified state of the display;
displaying an input area through the execution screen;
detecting a sliding event that a size of a display area of the display changes according to a sliding motion of the display while displaying the input area through the execution screen;
correcting input coordinates related to a user input of the input area based on the size of the display area that changes according to a slide state, based on detection of the sliding event; and
processing the user input based on the corrected input coordinates.

13. The method of claim 12, wherein the correcting comprises correcting a touch value for the input area according to the slide state of the display in a situation in which the user input and the sliding event occur together.

14. The method of claim 13, wherein the correcting comprises correcting the input coordinates by applying an offset corresponding to the slide state of the display to the input coordinates according to the user input.

15. A non-transitory computer-readable medium storing instructions that when executed by a processor of an electronic device, cause the processor to perform operations, wherein the instructions, when executed by the processor, cause the electronic device to perform,
an operation of displaying an execution screen of an application in a specified state of a display,
an operation of displaying an input area through the execution screen,
an operation of detecting a sliding event that a size of a display area of the display changes due to a sliding motion of the display while displaying the input area through the execution screen,
an operation of correcting input coordinates related to a user input of the input area based on the size of the display area that changes according to a slide state based on detection of the sliding event, and
an operation of processing the user input based on the corrected input coordinates.
